# EUROPEAN PATENT APPLICATION

(11) **EP 3 065 099 A2**
(43) Date of publication of application: **07.09.2016**
(21) Application number: 16157782.0
(22) Date of filing: 29.02.2016
(51) Int. Cl.: G06Q 20/32

(54) **MOBILE TERMINAL AND METHOD FOR CONTROLLING THE SAME**

(30) Priority: 05.03.2015 US 201562129027 P; 09.04.2015 KR 20150050361
(71) Applicant: LG Electronics Inc., Seoul 07336 (KR)
(72) Inventor: CHO, Taehoon, 06772 SEOUL (KR); KWON, Yunmi, 06772 SEOUL (KR); LEE, Kiseon, 06772 SEOUL (KR); SEOL, Jie, 06772 SEOUL (KR)
(74) Representative: Cabinet Plasseraud

(57) **Abstract**

A mobile terminal including a wireless communication processor configured to perform communication with a payment terminal; a display; and a controller configured to display a first card image corresponding to a first card to be used for payment on the display in response to a user input, perform user authentication for using the first card for payment, transmit card information corresponding to the first card to the payment terminal via the wireless communication processor, and output a notification indicating whether payment using the first card image is completed.

## Description

### BACKGROUND OF THE INVENTION

### Field of the Invention

The present invention relates to a mobile terminal capable of performing simple pay using registered card information after information of a real card is registered at the mobile terminal and a method of controlling therefor.

### Discussion of the Related Art

A terminal can be classified into a mobile/portable terminal and a stationary terminal. Again, the mobile terminal can be classified into a handheld terminal and a vehicle mounted terminal. In addition, a function of a mobile terminal is diversifying. For instance, the function of the mobile terminal includes data and audio communication, picture and video capturing via a camera, voice recording, playing a music file via a speaker system and outputting an image or a video on a display unit.

Some terminals perform a function of an electronic game or a function of a multimedia player. In particular, a latest mobile terminal can receive a multicast signal providing visual contents such as a broadcast, a video and a television program. As a function of a terminal is diversified, the terminal is implemented in a multimedia player form equipped with complex functions including capturing a picture or a video, playing music or a video file, gaming, receiving a broadcast and the like for example.

Recently, with the help of development of FinTech (finance technology), an area to which a mobile terminal is applicable is expanding to a payment field. As an example, if a mobile card is issued to a mobile terminal, a user can purchase a product by simply approaching the mobile terminal to which the mobile card is issued to an NFC payment terminal.

Meanwhile, if an error occurs when performing payment in a mobile terminal, the error may be different from an error occurring when paying by a legacy credit card.

### SUMMARY OF THE INVENTION

Accordingly, the present invention is directed to an apparatus and method thereof that substantially obviate one or more problems due to limitations and disadvantages of the related art.

An object of the present invention is to provide a mobile terminal enhancing user convenience and a method of controlling therefor.

Specifically, if an error occurs in a mobile terminal, which is usable by registering a real card at the mobile terminal, the object of the present invention is to provide a control method capable of informing a user of the error and handling the error.

Another object of the present invention is to provide a mobile terminal capable of minimizing an action of a user to solve an error according to a type of a payment error and a method of controlling therefor.

Technical tasks obtainable from the present invention are non-limited the above-mentioned technical task. And, other unmentioned technical tasks can be clearly understood from the following description by those having ordinary skill in the technical field to which the present invention pertains.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, according to one embodiment, a mobile terminal includes a wireless communication processor configured to perform communication with a payment terminal, a display, and a controller configured to display a first card image corresponding to a first card to be used for payment on the display in response to a user input,perform user authentication for using the first card for payment, transmit card information corresponding to the first card to the payment terminal via the wireless communication processor, and output a notification indicating whether payment using the first card image is completed.

To further achieve these objects and other advantages and in accordance with the purpose of the invention, as embodied and broadly described herein, a method of controlling a mobile terminal including a wireless communication unit configured to perform communication with a payment terminal and a display unit configured to output at least one or more card images includes the steps of, if a first user input of which a pointer touching the display unit is dragged in a first direction is received, controlling power of the display unit to be turned on in response to the user input, controlling a first card image to be output on the display unit, which is switched to a state of power on, receiving an input for performing user authentication, if the user authentication is successfully performed, controlling the wireless communication unit to transmit card information corresponding to the first card image and outputting a notification on whether payment for the card information corresponding to the first card image is completed.

Effects obtainable from the present invention may be non-limited by the above mentioned effect. And, other unmentioned effects can be clearly understood from the following description by those having ordinary skill in the technical field to which the present invention pertains.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. Hence, the present specification may be non-limited by items written on the drawings only.
FIG. 1A is a block diagram of a mobile terminal in accordance with the present disclosure;
FIGS. 1B and 1C are conceptual views of one example of the mobile terminal, viewed from different directions;
FIG. 1D is a perspective diagram illustrating a mobile terminal including a bended display according to one embodiment of the present specification.
FIG. IE is a conceptual diagram illustrating a mobile terminal communicating with a payment terminal.
FIG. 2 is a flowchart illustrating a process of performing a payment using a card registered at a mobile terminal according to the present specification;
FIG. 3 is a diagram illustrating an example of outputting an image of a first card on a display unit according to an input of a user;
FIG. 4 is a diagram illustrating an example of outputting information indicating that user authentication is completed;
FIG. 5 is a diagram illustrating an example of displaying information guiding a method of recognizing a payment terminal on a display unit;
FIG. 6 is a diagram illustrating an example of displaying information, which is configured to switch a method of recognizing a payment terminal, on a display unit;
FIG. 7 is a diagram illustrating an example of outputting a notification for whether a payment is completed on a display unit according to one embodiment of the present specification;
FIG. 8 is a diagram illustrating an example of outputting a notification for a successful payment on a display unit according to a different embodiment of the present specification;
FIG. 9 is a diagram illustrating an example of outputting a notification for the elapse of prescribed time on a display unit;
FIG. 10 is a diagram illustrating an example of a situation that a payment is not performed due to a weak signal;
FIG. 11 is a diagram illustrating an example of a situation that a payment is not performed due to a malfunction of a payment terminal;
FIG. 12 is a diagram illustrating an example of a situation that a payment is not performed due to a malfunction of a communication module;
FIG. 13 is a diagram illustrating an example of a situation that a payment is not performed due to excess of a payment limit;
FIG. 14 is a diagram illustrating an example of a notification displayed on a sub area of a bended display;
FIG. 15 is a diagram illustrating an example of making a payment using a transportation card according to one embodiment of the present specification; and
FIG. 16 is a diagram illustrating an example of making a payment using a transportation card according to a different embodiment of the present specification.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts. As used herein, the suffixes 'module', 'unit' and 'part' are used for elements in order to facilitate the disclosure only. Therefore, significant meanings or roles are not given to the suffixes themselves and the 'module', 'unit' and 'part' can be used together or interchangeably. It should be understood as the attached drawings include all changes, equivalents and substitutes included in the idea of the present invention and a technical scope.

Moreover, a terminology, each of which includes such an ordinal number as first, second and the like, may be used to describe various components. Further, the various components are not limited by the corresponding terminologies, respectively. The terminologies are only used for the purpose of discriminating one component from other components.

When one component is mentioned as 'connected to' or 'accessing' another component, it may be connected to or access the corresponding component in direct. Yet, new component(s) may exist in between. Further, when one component is mentioned as 'directly connected to' or 'directly accessing' another component, it should be understood that new component(s) may not exist in between.

And, the singular number representation used in the present specification may include the plural number representation unless mentioned clearly and differently in context. In the present application, such a terminology as 'comprise', 'include' and the like should be construed not as excluding existence of one or more characteristics, a number, a step, an operation, a component, a part or a combination thereof or a possibility of addition in advance but as designating existence of a characteristic, a number, a step, a component, a part or a combination thereof written on the disclosure.

A mobile terminal explained in the present specification may include a mobile phone, a smartphone, a laptop computer, a terminal used for digital broadcast, a PDA (personal digital assistant), a PMP (portable multimedia player), a navigation, a slate PC, a tablet PC, an ultra-book, a wearable device (e.g., a smartwatch, a smart glasses, a HMD (head mounted display)) and the like. By way of non-limiting example only, further description will be made with reference to particular types of mobile terminals. However, such teachings apply equally to other types of terminals, such as those types noted above. In addition, these teachings may also be applied to stationary terminals such as digital TV, desktop computers, and the like.

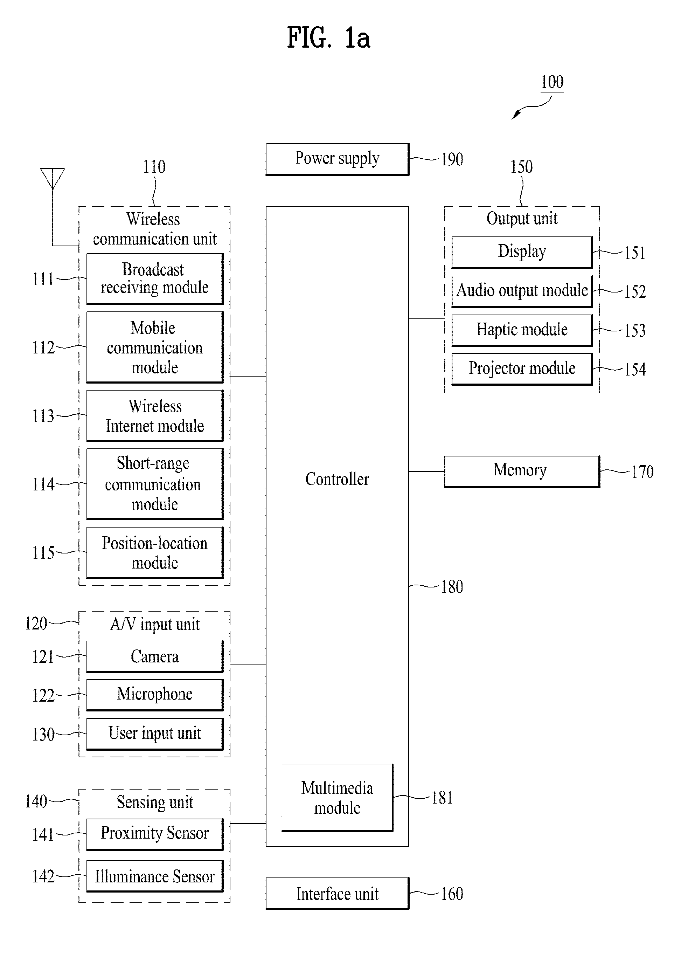

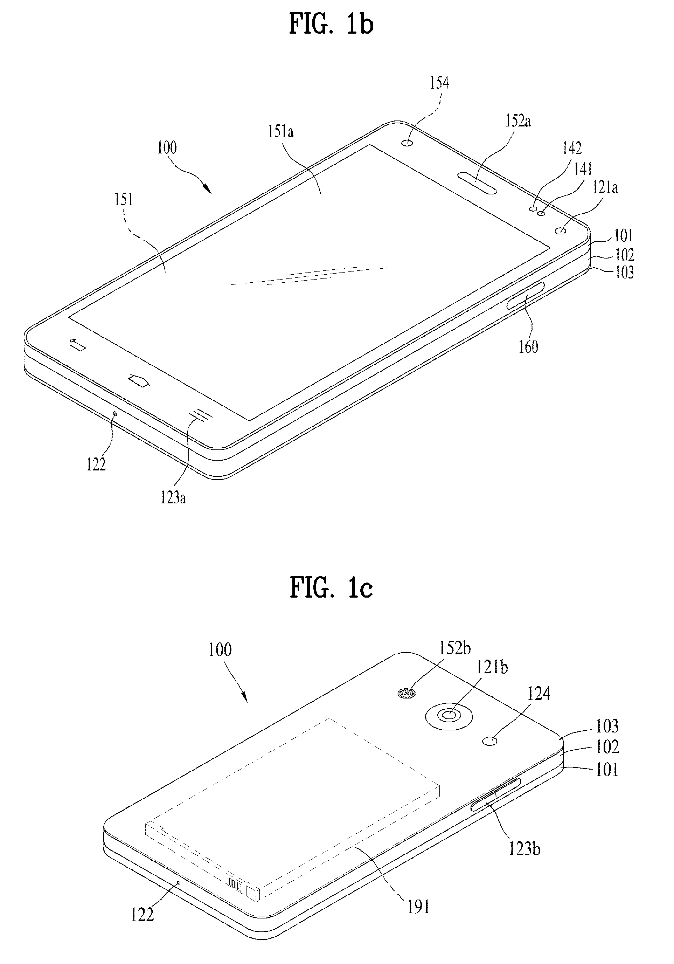

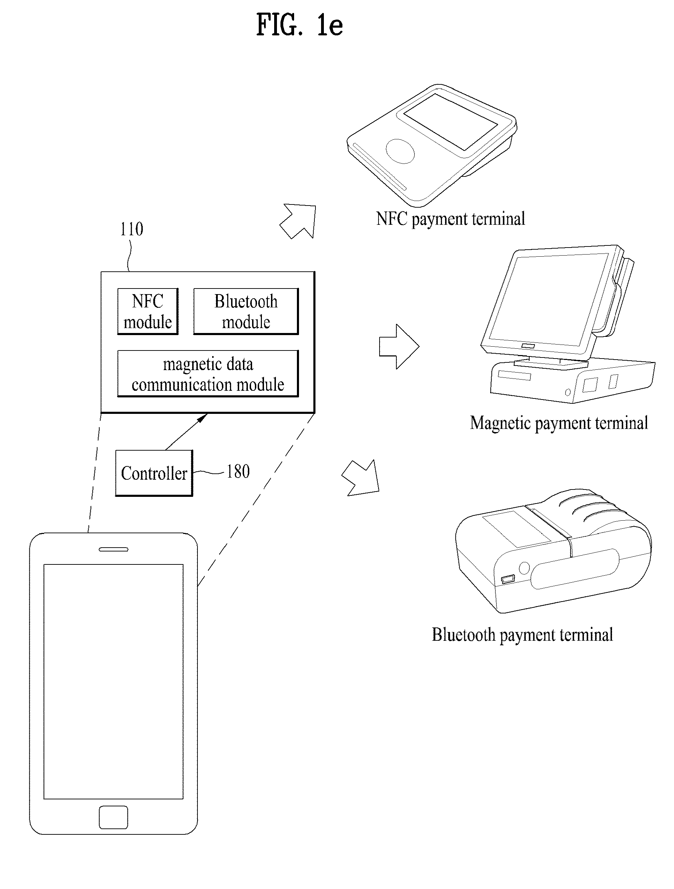

Reference is now made to FIGS. 1A-1C, where FIG. 1A is a block diagram of a mobile terminal in accordance with the present disclosure, and FIGS. 1B and 1C are conceptual views of one example of the mobile terminal, viewed from different directions. The mobile terminal 100 is shown having components such as a wireless communication unit 110, an input unit 120, a sensing unit 140, an output unit 150, an interface unit 160, a memory 170, a controller 180, and a power supply unit 190.Implementing all of the illustrated components is not a requirement, and that greater or fewer components may alternatively be implemented. Referring now to FIG. 1A, the mobile terminal 100 is shown having wireless communication unit 110 configured with several commonly implemented components.

The wireless communication unit 110 typically includes one or more modules which permit communications such as wireless communications between the mobile terminal 100 and a wireless communication system, communications between the mobile terminal 100 and another mobile terminal, communications between the mobile terminal 100 and an external server. Further, the wireless communication unit 110 typically includes one or more modules which connect the mobile terminal 100 to one or more networks.

To facilitate such communications, the wireless communication unit 110 includes one or more of a broadcast receiving module 111, a mobile communication module 112, a wireless Internet module 113, a short-range communication module 114, and a position-location module 115. The input unit 120 includes a camera 121 for obtaining images or video, a microphone 122, which is one type of audio input device for inputting an audio signal, and a user input unit 123 (for example, a touch key, a push key, a mechanical key, a soft key, and the like) for allowing a user to input information. Data (for example, audio, video, image, and the like) is obtained by the input unit 120 and may be analyzed and processed by controller 180 according to device parameters, user commands, and combinations thereof.

The sensing unit 140 is typically implemented using one or more sensors configured to sense internal information of the mobile terminal, the surrounding environment of the mobile terminal, user information, and the like. For example, in FIG. 1A, the sensing unit 140 is shown having a proximity sensor 141 and an illumination sensor 142. If desired, the sensing unit 140 may alternatively or additionally include other types of sensors or devices, such as a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, camera 121), a microphone 122, a battery gauge, an environment sensor (for example, a barometer, a hygrometer, a thermometer, a radiation detection sensor, a thermal sensor, and a gas sensor, among others), and a chemical sensor (for example, an electronic nose, a health care sensor, a biometric sensor, and the like), to name a few. The mobile terminal 100 may be configured to utilize information obtained from sensing unit 140, and in particular, information obtained from one or more sensors of the sensing unit 140, and combinations thereof.

The output unit 150 is typically configured to output various types of information, such as audio, video, tactile output, and the like. The output unit 150 is shown having a display unit 151, an audio output module 152, a haptic module 153, and an optical output module/projector module 154. The display unit 151 may have an inter-layered structure or an integrated structure with a touch sensor in order to facilitate a touch screen. The touch screen may provide an output interface between the mobile terminal 100 and a user, as well as function as the user input unit 123 which provides an input interface between the mobile terminal 100 and the user.

The interface unit 160 serves as an interface with various types of external devices that can be coupled to the mobile terminal 100. The interface unit 160, for example, may include any of wired or wireless ports, external power supply ports, wired or wireless data ports, memory card ports, ports for connecting a device having an identification module, audio input/output (I/O) ports, video I/O ports, earphone ports, and the like. In some cases, the mobile terminal 100 may perform assorted control functions associated with a connected external device, in response to the external device being connected to the interface unit 160.

The memory 170 is typically implemented to store data to support various functions or features of the mobile terminal 100. For instance, the memory 170 may be configured to store application programs executed in the mobile terminal 100, data or instructions for operations of the mobile terminal 100, and the like. Some of these application programs may be downloaded from an external server via wireless communication. Other application programs may be installed within the mobile terminal 100 at time of manufacturing or shipping, which is typically the case for basic functions of the mobile terminal 100 (for example, receiving a call, placing a call, receiving a message, sending a message, and the like). It is common for application programs to be stored in the memory 170, installed in the mobile terminal 100, and executed by the controller 180 to perform an operation (or function) for the mobile terminal 100.

The controller 180 typically functions to control overall operation of the mobile terminal 100, in addition to the operations associated with the application programs. The controller 180 can provide or process information or a function appropriate for a user by processing a signal, data, information and the like input or output via the aforementioned configuration elements or executing an application program stored in the memory 170.

The controller 180 can provide or process information or functions appropriate for a user by processing signals, data, information and the like, which are input or output by the various components depicted in Fig. 1A, or activating application programs stored in the memory 170. As one example, the controller 180 controls some or all of the components illustrated in FIGS. 1A according to the execution of an application program that have been stored in the memory 170.

The power supply unit 190 can be configured to receive external power or provide internal power in order to supply appropriate power required for operating elements and components included in the mobile terminal 100. The power supply unit 190 may include a battery, and the battery may be configured to be embedded in the terminal body, or configured to be detachable from the terminal body.

At least a part of the configuration elements can operate by cooperating with each other to implement an operation of a mobile terminal, control of the mobile terminal or a method of controlling the mobile terminal according to various embodiments described in the following. And, the operation of the mobile terminal, the control of the mobile terminal or the method of controlling the mobile terminal can be implemented on the mobile terminal by driving at least one or more application programs stored in the memory 170.

Referring still to FIG. 1A, various components depicted in this figure will now be described in more detail. Regarding the wireless communication unit 110, the broadcast receiving module 111 is typically configured to receive a broadcast signal and/or broadcast associated information from an external broadcast managing entity via a broadcast channel. The broadcast channel may include a satellite channel, a terrestrial channel, or both. In some embodiments, two or more broadcast receiving modules 111 may be utilized to facilitate simultaneously receiving of two or more broadcast channels, or to support switching among broadcast channels.

The mobile communication module 112 can transmit and/or receive wireless signals to and from one or more network entities. Typical examples of a network entity include a base station, an external mobile terminal, a server, and the like. Such network entities form part of a mobile communication network, which is constructed according to technical standards or communication methods for mobile communications (for example, Global System for Mobile Communication (GSM), Code Division Multi Access (CDMA), CDMA2000 (Code Division Multi Access 2000), EV-DO (Enhanced Voice-Data Optimized or Enhanced Voice-Data Only), Wideband CDMA (WCDMA), High Speed Downlink Packet access (HSDPA), HSUPA (High Speed Uplink Packet Access), Long Term Evolution (LTE) , LTE-A (Long Term Evolution-Advanced), and the like).

Examples of wireless signals transmitted and/or received via the mobile communication module 112 include audio call signals, video (telephony) call signals, or various formats of data to support communication of text and multimedia messages. The wireless Internet module 113 is configured to facilitate wireless Internet access. This module may be internally or externally coupled to the mobile terminal 100. The wireless Internet module 113 may transmit and/or receive wireless signals via communication networks according to wireless Internet technologies.

Examples of such wireless Internet access include Wireless LAN (WLAN), Wireless Fidelity (Wi-Fi), Wi-Fi Direct, Digital Living Network Alliance (DLNA), Wireless Broadband (WiBro), Worldwide Interoperability for Microwave Access (WiMAX), High Speed Downlink Packet Access (HSDPA), HSUPA (High Speed Uplink Packet Access), Long Term Evolution (LTE), LTE-A (Long Term Evolution-Advanced), and the like. The wireless Internet module 113 may transmit/receive data according to one or more of such wireless Internet technologies, and other Internet technologies as well.

In some embodiments, when the wireless Internet access is implemented according to, for example, WiBro, HSDPA,HSUPA, GSM, CDMA, WCDMA, LTE, LTE-A and the like, as part of a mobile communication network, the wireless Internet module 113 performs such wireless Internet access. As such, the Internet module 113 may cooperate with, or function as, the mobile communication module 112.

The short-range communication module 114 is configured to facilitate short-range communications. Suitable technologies for implementing such short-range communications include BLUETOOTHTM, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB (Wireless Universal Serial Bus), and the like. The short-range communication module 114 in general supports wireless communications between the mobile terminal 100 and a wireless communication system, communications between the mobile terminal 100 and another mobile terminal 100, or communications between the mobile terminal and a network where another mobile terminal 100 (or an external server) is located, via wireless area networks. One example of the wireless area networks is a wireless personal area networks.

In some embodiments, another mobile terminal (which may be configured similarly to mobile terminal 100) may be a wearable device, for example, a smart watch, a smart glass or a head mounted display (HMD), which can exchange data with the mobile terminal 100 (or otherwise cooperate with the mobile terminal 100). The short-range communication module 114 may sense or recognize the wearable device, and permit communication between the wearable device and the mobile terminal 100. In addition, when the sensed wearable device is a device which is authenticated to communicate with the mobile terminal 100, the controller 180, for example, may cause transmission of data processed in the mobile terminal 100 to the wearable device via the short-range communication module 114. Hence, a user of the wearable device may use the data processed in the mobile terminal 100 on the wearable device. For example, when a call is received in the mobile terminal 100, the user may answer the call using the wearable device. Also, when a message is received in the mobile terminal 100, the user can check the received message using the wearable device.

The position-location module 115 is generally configured to detect, calculate, derive or otherwise identify a position of the mobile terminal. As an example, the position-location module 115 includes a Global Position System (GPS) module, a Wi-Fi module, or both. If desired, the position-location module 115 may alternatively or additionally function with any of the other modules of the wireless communication unit 110 to obtain data related to the position of the mobile terminal. As one example, when the mobile terminal uses a GPS module, a position of the mobile terminal may be acquired using a signal sent from a GPS satellite. As another example, when the mobile terminal uses the Wi-Fi module, a position of the mobile terminal can be acquired based on information related to a wireless access point (AP) which transmits or receives a wireless signal to or from the Wi-Fi module.

The input unit 120 may be configured to permit various types of input to the mobile terminal 120. Examples of such input include audio, image, video, data, and user input. Image and video input is often obtained using one or more cameras 121. Such cameras 121 may process image frames of still pictures or video obtained by image sensors in a video or image capture mode. The processed image frames can be displayed on the display unit 151 or stored in memory 170. In some cases, the cameras 121 may be arranged in a matrix configuration to permit a plurality of images having various angles or focal points to be input to the mobile terminal 100. As another example, the cameras 121 may be located in a stereoscopic arrangement to acquire left and right images for implementing a stereoscopic image.

The microphone 122 is generally implemented to permit audio input to the mobile terminal 100. The audio input can be processed in various manners according to a function being executed in the mobile terminal 100. If desired, the microphone 122 may include assorted noise removing algorithms to remove unwanted noise generated in the course of receiving the external audio.

The user input unit 123 is a component that permits input by a user. Such user input may enable the controller 180 to control operation of the mobile terminal 100. The user input unit 123 may include one or more of a mechanical input element (for example, a key, a button located on a front and/or rear surface or a side surface of the mobile terminal 100, a dome switch, a jog wheel, a jog switch, and the like), or a touch-sensitive input, among others. As one example, the touch-sensitive input may be a virtual key or a soft key, which is displayed on a touch screen through software processing, or a touch key which is located on the mobile terminal at a location that is other than the touch screen. Further, the virtual key or the visual key may be displayed on the touch screen in various shapes, for example, graphic, text, icon, video, or a combination thereof.

The sensing unit 140 is generally configured to sense one or more of internal information of the mobile terminal, surrounding environment information of the mobile terminal, user information, or the like. The controller 180 generally cooperates with the sending unit 140 to control operation of the mobile terminal 100 or execute data processing, a function or an operation associated with an application program installed in the mobile terminal based on the sensing provided by the sensing unit 140. The sensing unit 140 may be implemented using any of a variety of sensors, some of which will now be described in more detail.

The proximity sensor 141 may include a sensor to sense presence or absence of an object approaching a surface, or an object located near a surface, by using an electromagnetic field, infrared rays, or the like without a mechanical contact. The proximity sensor 141 may be arranged at an inner region of the mobile terminal covered by the touch screen, or near the touch screen.

The proximity sensor 141, for example, may include any of a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and the like. When the touch screen is implemented as a capacitance type, the proximity sensor 141 can sense proximity of a pointer relative to the touch screen by changes of an electromagnetic field, which is responsive to an approach of an object with conductivity. In this instance, the touch screen (touch sensor) may also be categorized as a proximity sensor.

The term "proximity touch" will often be referred to herein to denote the scenario in which a pointer is positioned to be proximate to the touch screen without contacting the touch screen. The term "contact touch" will often be referred to herein to denote the scenario in which a pointer makes physical contact with the touch screen. For the position corresponding to the proximity touch of the pointer relative to the touch screen, such position will correspond to a position where the pointer is perpendicular to the touch screen. The proximity sensor 141 may sense proximity touch, and proximity touch patterns (for example, distance, direction, speed, time, position, moving status, and the like).

In general, controller 180 processes data corresponding to proximity touches and proximity touch patterns sensed by the proximity sensor 141, and cause output of visual information on the touch screen. In addition, the controller 180 can control the mobile terminal 100 to execute different operations or process different data according to whether a touch with respect to a point on the touch screen is either a proximity touch or a contact touch.

A touch sensor can sense a touch applied to the touch screen, such as display unit 151, using any of a variety of touch methods. Examples of such touch methods include a resistive type, a capacitive type, an infrared type, and a magnetic field type, among others. As one example, the touch sensor may be configured to convert changes of pressure applied to a specific part of the display unit 151, or convert capacitance occurring at a specific part of the display unit 151, into electric input signals. The touch sensor may also be configured to sense not only a touched position and a touched area, but also touch pressure and/or touch capacitance. A touch object is generally used to apply a touch input to the touch sensor. Examples of typical touch objects include a finger, a touch pen, a stylus pen, a pointer, or the like.

When a touch input is sensed by a touch sensor, corresponding signals may be transmitted to a touch controller. The touch controller may process the received signals, and then transmit corresponding data to the controller 180. Accordingly, the controller 180 can sense which region of the display unit 151 has been touched. Here, the touch controller may be a component separate from the controller 180, the controller 180, and combinations thereof.

In some embodiments, the controller 180 can execute the same or different controls according to a type of touch object that touches the touch screen or a touch key provided in addition to the touch screen. Whether to execute the same or different control according to the object which provides a touch input may be decided based on a current operating state of the mobile terminal 100 or a currently executed application program, for example.

The touch sensor and the proximity sensor may be implemented individually, or in combination, to sense various types of touches. Such touches includes a short (or tap) touch, a long touch, a multi-touch, a drag touch, a flick touch, a pinch-in touch, a pinch-out touch, a swipe touch, a hovering touch, and the like.

If desired, an ultrasonic sensor may be implemented to recognize position information relating to a touch object using ultrasonic waves. The controller 180, for example, may calculate a position of a wave generation source based on information sensed by an illumination sensor and a plurality of ultrasonic sensors. Since light is much faster than ultrasonic waves, the time for which the light reaches the optical sensor is much shorter than the time for which the ultrasonic wave reaches the ultrasonic sensor. The position of the wave generation source may be calculated using this fact. For instance, the position of the wave generation source may be calculated using the time difference from the time that the ultrasonic wave reaches the sensor based on the light as a reference signal.

The camera 121 typically includes at least one a camera sensor (CCD, CMOS etc.), a photo sensor (or image sensors), and a laser sensor. Implementing the camera 121 with a laser sensor may allow detection of a touch of a physical object with respect to a 3D stereoscopic image. The photo sensor may be laminated on, or overlapped with, the display device. The photo sensor may be configured to scan movement of the physical object in proximity to the touch screen. In more detail, the photo sensor may include photo diodes and transistors at rows and columns to scan content received at the photo sensor using an electrical signal which changes according to the quantity of applied light. Namely, the photo sensor may calculate the coordinates of the physical object according to variation of light to thus obtain position information of the physical object.

The display unit 151 is generally configured to output information processed in the mobile terminal 100. For example, the display unit 151 may display execution screen information of an application program executing at the mobile terminal 100 or user interface (UI) and graphic user interface (GUI) information in response to the execution screen information.

In some embodiments, the display unit 151 may be implemented as a stereoscopic display unit for displaying stereoscopic images. A typical stereoscopic display unit may employ a stereoscopic display scheme such as a stereoscopic scheme (a glass scheme), an auto-stereoscopic scheme (glassless scheme), a projection scheme (holographic scheme), or the like.

The audio output module 152 is generally configured to output audio data. Such audio data may be obtained from any of a number of different sources, such that the audio data may be received from the wireless communication unit 110 or may have been stored in the memory 170. The audio data may be output during modes such as a signal reception mode, a call mode, a record mode, a voice recognition mode, a broadcast reception mode, and the like. The audio output module 152 can provide audible output related to a particular function (e.g., a call signal reception sound, a message reception sound, etc.) performed by the mobile terminal 100. The audio output module 152 may also be implemented as a receiver, a speaker, a buzzer, or the like.

A haptic module 153 can be configured to generate various tactile effects that a user feels, perceive, or otherwise experience. A typical example of a tactile effect generated by the haptic module 153 is vibration. The strength, pattern and the like of the vibration generated by the haptic module 153 can be controlled by user selection or setting by the controller. For example, the haptic module 153 may output different vibrations in a combining manner or a sequential manner.

Besides vibration, the haptic module 153 can generate various other tactile effects, including an effect by stimulation such as a pin arrangement vertically moving to contact skin, a spray force or suction force of air through a jet orifice or a suction opening, a touch to the skin, a contact of an electrode, electrostatic force, an effect by reproducing the sense of cold and warmth using an element that can absorb or generate heat, and the like.

The haptic module 153 can also be implemented to allow the user to feel a tactile effect through a muscle sensation such as the user's fingers or arm, as well as transferring the tactile effect through direct contact. Two or more haptic modules 153 may be provided according to the particular configuration of the mobile terminal 100.

An optical output module/projector module 154 can output a signal for indicating an event generation using light of a light source. Examples of events generated in the mobile terminal 100 may include message reception, call signal reception, a missed call, an alarm, a schedule notice, an email reception, information reception through an application, and the like.

A signal output by the optical output module 154 may be implemented so the mobile terminal emits monochromatic light or light with a plurality of colors. The signal output may be terminated as the mobile terminal senses that a user has checked the generated event, for example.

The interface unit 160 serves as an interface for external devices to be connected with the mobile terminal 100. For example, the interface unit 160 can receive data transmitted from an external device, receive power to transfer to elements and components within the mobile terminal 100, or transmit internal data of the mobile terminal 100 to such external device. The interface unit 160 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating authority of using the mobile terminal 100 and may include a user identity module (UIM), a subscriber identity module (SIM), a universal subscriber identity module (USIM), and the like. In addition, the device having the identification module (also referred to herein as an "identifying device") may take the form of a smart card. Accordingly, the identifying device can be connected with the terminal 100 via the interface unit 160.

When the mobile terminal 100 is connected with an external cradle, the interface unit 160 can serve as a passage to allow power from the cradle to be supplied to the mobile terminal 100 or may serve as a passage to allow various command signals input by the user from the cradle to be transferred to the mobile terminal there through. Various command signals or power input from the cradle may operate as signals for recognizing that the mobile terminal is properly mounted on the cradle.

The memory 170 can store programs to support operations of the controller 180 and store input/output data (for example, phonebook, messages, still images, videos, etc.). The memory 170 may store data related to various patterns of vibrations and audio which are output in response to touch inputs on the touch screen.

The memory 170 may include one or more types of storage mediums including a Flash memory, a hard disk, a solid state disk, a silicon disk, a multimedia card micro type, a card-type memory (e.g., SD or DX memory, etc.), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, an optical disk, and the like. The mobile terminal 100 may also be operated in relation to a network storage device that performs the storage function of the memory 170 over a network, such as the Internet.

The controller 180 can typically control the general operations of the mobile terminal 100. For example, the controller 180 can set or release a lock state for restricting a user from inputting a control command with respect to applications when a status of the mobile terminal meets a preset condition.

The controller 180 can also perform the controlling and processing associated with voice calls, data communications, video calls, and the like, or perform pattern recognition processing to recognize a handwriting input or a picture drawing input performed on the touch screen as characters or images, respectively. In addition, the controller 180 can control one or a combination of those components in order to implement various exemplary embodiments disclosed herein.

The power supply unit 190 receives external power or provide internal power and supply the appropriate power required for operating respective elements and components included in the mobile terminal 100. The power supply unit 190 may include a battery, which is typically rechargeable or be detachably coupled to the terminal body for charging.

The power supply unit 190 may include a connection port. The connection port may be configured as one example of the interface unit 160 to which an external charger for supplying power to recharge the battery is electrically connected. As another example, the power supply unit 190 may be configured to recharge the battery in a wireless manner without use of the connection port. In this example, the power supply unit 190 can receive power, transferred from an external wireless power transmitter, using at least one of an inductive coupling method which is based on magnetic induction or a magnetic resonance coupling method which is based on electromagnetic resonance. Various embodiments described herein may be implemented in a computer-readable medium, a machine-readable medium, or similar medium using, for example, software, hardware, or any combination thereof.

Referring now to FIGS. 1B and 1C, the mobile terminal 100 is described with reference to a bar-type terminal body. However, the mobile terminal 100 may alternatively be implemented in any of a variety of different configurations. Examples of such configurations include watch-type, clip-type, glasses-type, or as a folder-type, flip-type, slide-type, swing-type, and swivel-type in which two and more bodies are combined with each other in a relatively movable manner, and combinations thereof. Discussion herein will often relate to a particular type of mobile terminal (for example, bar-type, watch-type, glasses-type, and the like). However, such teachings with regard to a particular type of mobile terminal will generally apply to other types of mobile terminals as well.

The mobile terminal 100 will generally include a case (for example, frame, housing, cover, and the like) forming the appearance of the terminal. In this embodiment, the case is formed using a front case 101 and a rear case 102. Various electronic components are incorporated into a space formed between the front case 101 and the rear case 102. At least one middle case may be additionally positioned between the front case 101 and the rear case 102.

The display unit 151 is shown located on the front side of the terminal body to output information. As illustrated, a window 151 a of the display unit 151 may be mounted to the front case 101 to form the front surface of the terminal body together with the front case 101.

In some embodiments, electronic components may also be mounted to the rear case 102. Examples of such electronic components include a detachable battery 191, an identification module, a memory card, and the like. Rear cover 103 is shown covering the electronic components, and this cover may be detachably coupled to the rear case 102. Therefore, when the rear cover 103 is detached from the rear case 102, the electronic components mounted to the rear case 102 are externally exposed.

As illustrated, when the rear cover 103 is coupled to the rear case 102, a side surface of the rear case 102 is partially exposed. In some cases, upon the coupling, the rear case 102 may also be completely shielded by the rear cover 103. In some embodiments, the rear cover 103 may include an opening for externally exposing a camera 121b or an audio output module 152b.

The cases 101, 102, 103 may be formed by injection-molding synthetic resin or may be formed of a metal, for example, stainless steel (STS), aluminum (Al), titanium (Ti), or the like. As an alternative to the example in which the plurality of cases form an inner space for accommodating components, the mobile terminal 100 may be configured such that one case forms the inner space. In this example, a mobile terminal 100 having a uni-body is formed so synthetic resin or metal extends from a side surface to a rear surface.

If desired, the mobile terminal 100 may include a waterproofing unit for preventing introduction of water into the terminal body. For example, the waterproofing unit may include a waterproofing member which is located between the window 151a and the front case 101, between the front case 101 and the rear case 102, or between the rear case 102 and the rear cover 103, to hermetically seal an inner space when those cases are coupled.

The mobile terminal 100 can include the display unit 151, the first and second audio output unit 152a/152b, the proximity sensor 141, the illumination sensor 142, the optical output unit 154, the first and second camera 121a/121b, the first and second operation unit 123a/123b, the microphone 122, the interface unit 160 and the like.

FIGS. 1B and 1C depict certain components as arranged on the mobile terminal. However, alternative arrangements are possible and within the teachings of the instant disclosure. Some components may be omitted or rearranged. For example, the first manipulation unit 123a may be located on another surface of the terminal body, and the second audio output module 152b may be located on the side surface of the terminal body.

The display unit 151 outputs information processed in the mobile terminal 100. The display unit 151 may be implemented using one or more suitable display devices. Examples of such suitable display devices include a liquid crystal display (LCD), a thin film transistor-liquid crystal display (TFT-LCD), an organic light emitting diode (OLED), a flexible display, a 3-dimensional (3D) display, an e-ink display, and combinations thereof.

The display unit 151 may be implemented using two display devices, which can implement the same or different display technology. For instance, a plurality of the display units 151 may be arranged on one side, either spaced apart from each other, or these devices may be integrated, or these devices may be arranged on different surfaces.

Meanwhile, the display unit 151 may correspond to a bended display including a main area 151-1 facing the front side of the mobile terminal 100 and a sub area 151-2 including a prescribed curvature by being extended from the main area 151-1.

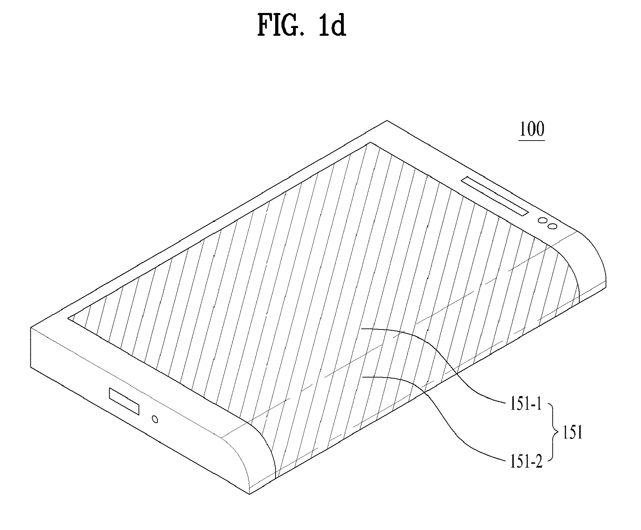

FIG. 1D is a perspective diagram illustrating a mobile terminal including a bended display according to one embodiment of the present specification. Referring to FIG. 1D, an example that the sub area 151-2 of the bended display 151 is positioned at the right side of the device based on the front side of the mobile terminal 100 is shown. Yet, the bended display 151 according to the present specification can be implemented in various forms. For instance, the sub area 151-2 can be positioned at one side selected from the group consisting of the left side, the upper side and the bottom side of the mobile terminal 100. Moreover, the bended display 151 can include the sub area 151-2 in at least two or more positions selected from the group consisting of the right side, the left side, the upper side and the bottom side of the mobile terminal 100.

Since the bended display 151 uses a plastic board instead of a generally used glass board, in order to prevent a board from being damaged, the board can be formed using a low temperature manufacturing processor without using a legacy manufacturing processor. The bended display 151 provides flexibility capable of being fold and unfold by replacing a glass board wrapping a liquid crystal in a LCD (liquid crystal display, an LED (light-emitting diode), an OLED (organic LED) and an AMOLED (active matrix OLED) with a plastic film. The bended display 151 is thin, light and burst-proof. And, as mentioned in the foregoing description, since the bended display is bendable and foldable, the bended display can be manufactured in various forms.

The bended display 151 can have an active matrix screen of a specific screen size (e.g., 3 inches, 4 inches, 4.65 inches, 4.8 inches, 5 inches, 6.5 inches, 7.7 inches, 8.9 inches, 10.1 inches and the like) according to a size of the mobile terminal 100. And, the sub area can be combined with the device 100 in a manner that curvature of the sub area 151-2 is folded as much as equal to or less than a radius of curvature in which the bended display 151 is operable (e.g., 5 cm, 1 cm, 7.5 mm, 5 mm, 4mm and the like).

The display unit 151 may also include a touch sensor which senses a touch input received at the display unit. When a touch is input to the display unit 151, the touch sensor may be configured to sense this touch and the controller 180, for example, may generate a control command or other signal corresponding to the touch. The content which is input in the touching manner may be a text or numerical value, or a menu item which can be indicated or designated in various modes.

The touch sensor may be configured in a form of a film having a touch pattern, disposed between the window 151a and a display on a rear surface of the window 151a, or a metal wire which is patterned directly on the rear surface of the window 151a. Alternatively, the touch sensor may be integrally formed with the display. For example, the touch sensor may be disposed on a substrate of the display or within the display.

The display unit 151 may also form a touch screen together with the touch sensor. Here, the touch screen may serve as the user input unit 123 (see FIG. 1A). Therefore, the touch screen may replace at least some of the functions of the first manipulation unit 123a. The first audio output module 152a may be implemented in the form of a speaker to output voice audio, alarm sounds, multimedia audio reproduction, and the like.

The window 151a of the display unit 151 will typically include an aperture to permit audio generated by the first audio output module 152a to pass. One alternative is to allow audio to be released along an assembly gap between the structural bodies (for example, a gap between the window 151a and the front case 101). In this instance, a hole independently formed to output audio sounds may not be seen or is otherwise hidden in terms of appearance, thereby further simplifying the appearance and manufacturing of the mobile terminal 100.

The optical output module 154 can be configured to output light for indicating an event generation. Examples of such events include a message reception, a call signal reception, a missed call, an alarm, a schedule notice, an email reception, information reception through an application, and the like. When a user has checked a generated event, the controller can control the optical output unit 154 to stop the light output.

The first camera 121a can process image frames such as still or moving images obtained by the image sensor in a capture mode or a video call mode. The processed image frames can then be displayed on the display unit 151 or stored in the memory 170.

The first and second manipulation units 123a and 123b are examples of the user input unit 123, which may be manipulated by a user to provide input to the mobile terminal 100. The first and second manipulation units 123a and 123b may also be commonly referred to as a manipulating portion, and may employ any tactile method that allows the user to perform manipulation such as touch, push, scroll, or the like. The first and second manipulation units 123a and 123b may also employ any non-tactile method that allows the user to perform manipulation such as proximity touch, hovering, or the like.

FIG. 1B illustrates the first manipulation unit 123a as a touch key, but possible alternatives include a mechanical key, a push key, a touch key, and combinations thereof. Input received at the first and second manipulation units 123a and 123b may be used in various ways. For example, the first manipulation unit 123a may be used by the user to provide an input to a menu, home key, cancel, search, or the like, and the second manipulation unit 123b may be used by the user to provide an input to control a volume level being output from the first or second audio output modules 152a or 152b, to switch to a touch recognition mode of the display unit 151, or the like.

As another example of the user input unit 123, a rear input unit may be located on the rear surface of the terminal body. The rear input unit can be manipulated by a user to provide input to the mobile terminal 100. The input may be used in a variety of different ways. For example, the rear input unit may be used by the user to provide an input for power on/off, start, end, scroll, control volume level being output from the first or second audio output modules 152a or 152b, switch to a touch recognition mode of the display unit 151, and the like. The rear input unit may be configured to permit touch input, a push input, or combinations thereof.

The rear input unit may be located to overlap the display unit 151 of the front side in a thickness direction of the terminal body. As one example, the rear input unit may be located on an upper end portion of the rear side of the terminal body such that a user can easily manipulate it using a forefinger when the user grabs the terminal body with one hand. Alternatively, the rear input unit can be positioned at most any location of the rear side of the terminal body.

Embodiments that include the rear input unit may implement some or all of the functionality of the first manipulation unit 123a in the rear input unit. As such, in situations where the first manipulation unit 123a is omitted from the front side, the display unit 151 can have a larger screen.

As a further alternative, the mobile terminal 100 may include a finger scan sensor which scans a user's fingerprint. The controller 180 can then use fingerprint information sensed by the finger scan sensor as part of an authentication procedure. The finger scan sensor may also be installed in the display unit 151 or implemented in the user input unit 123.

The microphone 122 is shown located at an end of the mobile terminal 100, but other locations are possible. If desired, multiple microphones may be implemented, with such an arrangement permitting the receiving of stereo sounds.

The interface unit 160 may serve as a path allowing the mobile terminal 100 to interface with external devices. For example, the interface unit 160 may include one or more of a connection terminal for connecting to another device (for example, an earphone, an external speaker, or the like), a port for near field communication (for example, an Infrared Data Association (IrDA) port, a Bluetooth port, a wireless LAN port, and the like), or a power supply terminal for supplying power to the mobile terminal 100. The interface unit 160 may be implemented in the form of a socket for accommodating an external card, such as Subscriber Identification Module (SIM), User Identity Module (UIM), or a memory card for information storage.

The second camera 121b is shown located at the rear side of the terminal body and includes an image capturing direction that is substantially opposite to the image capturing direction of the first camera unit 121a. If desired, second camera 121a may alternatively be located at other locations, or made to be moveable, in order to have a different image capturing direction from that which is shown.

The second camera 121b can include a plurality of lenses arranged along at least one line. The plurality of lenses may also be arranged in a matrix configuration. The cameras may be referred to as an "array camera." When the second camera 121b is implemented as an array camera, images may be captured in various manners using the plurality of lenses and images with better qualities.

As shown in FIG. 1C, a flash 124 is shown adjacent to the second camera 121b. When an image of a subject is captured with the camera 121b, the flash 124 may illuminate the subject. As shown in FIG. 1C, the second audio output module 152b can be located on the terminal body. The second audio output module 152b may implement stereophonic sound functions in conjunction with the first audio output module 152a, and may be also used for implementing a speaker phone mode for call communication.

At least one antenna for wireless communication may be located on the terminal body. The antenna may be installed in the terminal body or formed by the case. For example, an antenna which configures a part of the broadcast receiving module 111 may be retractable into the terminal body. Alternatively, an antenna may be formed using a film attached to an inner surface of the rear cover 103, or a case that includes a conductive material.

A power supply unit 190 for supplying power to the mobile terminal 100 may include a battery 191, which is mounted in the terminal body or detachably coupled to an outside of the terminal body. The battery 191 may receive power via a power source cable connected to the interface unit 160. Also, the battery 191 can be recharged in a wireless manner using a wireless charger. Wireless charging may be implemented by magnetic induction or electromagnetic resonance.

The rear cover 103 is shown coupled to the rear case 102 for shielding the battery 191, to prevent separation of the battery 191, and to protect the battery 191 from an external impact or from foreign material. When the battery 191 is detachable from the terminal body, the rear case 103 may be detachably coupled to the rear case 102.

An accessory for protecting an appearance or assisting or extending the functions of the mobile terminal 100 can also be provided on the mobile terminal 100. As one example of an accessory, a cover or pouch for covering or accommodating at least one surface of the mobile terminal 100 may be provided. The cover or pouch may cooperate with the display unit 151 to extend the function of the mobile terminal 100. Another example of the accessory is a touch pen for assisting or extending a touch input to a touch screen.

For clarity, assume that the mobile terminal according to an embodiment of the present invention includes at least one or more configuration elements depicted in FIGS. 1A to 1D. As an example, assume that a mobile terminal according to embodiments described in the following includes the wireless communication unit 110, the display unit 151, the memory 170, the controller 180 and the like among the configuration elements depicted in FIGS. 1A to 1D.

In this instance, at least one or more communication modules can be included in the wireless communication unit 110 to perform communication between a mobile terminal and a payment terminal. As an example, FIG. IE is a conceptual diagram illustrating a mobile terminal communicating with a payment terminal. As shown in an example of FIG. IE, a mobile terminal can perform communication with at least one selected from the group consisting of an NFC payment terminal, a Bluetooth (e.g., BLE (Bluetooth low energy) payment terminal and a magnetic payment terminal. In order to perform communication with at least one selected from the group consisting of the NFC payment terminal, the Bluetooth payment terminal and the magnetic payment terminal, the mobile terminal can include at least one selected from the group consisting of an NFC module, a Bluetooth module and a magnetic communication module.

The NFC module is used to perform communication with the NFC payment terminal using an NFC technology. As an example, the NFC module of the mobile terminal is configured by a card emulation mode and the NFC payment terminal is configured by a reader mode. By doing so, the NFC payment terminal can obtain card information registered at the mobile terminal from the NFC module of the mobile terminal. As a different example, the NFC module and the NFC payment terminal can perform communication with each other by being configured by a P2P mode together.

The Bluetooth module is used to perform communication with the Bluetooth payment terminal using a Bluetooth technology. As an example, if the Bluetooth module of the mobile terminal receives a beacon signal from the Bluetooth payment terminal, the Bluetooth module can establish association with the payment terminal based on the received beacon signal. By doing so, the mobile terminal can transmit card information registered at the mobile terminal to the Bluetooth payment terminal via the Bluetooth module.

The magnetic communication module is used to perform communication with a payment terminal (i.e., magnetic payment terminal) in which a magnetic reader is installed. If a card to be used is selected, the mobile terminal can broadcast card information of the selected card via the magnetic communication module. A payment can be performed between the mobile terminal and the magnetic payment module in a manner that the magnetic payment module listens to data broadcasted by the mobile terminal.

In the following, the mobile terminal according to an embodiment of the present invention is explained in detail with reference to drawing described in the following.

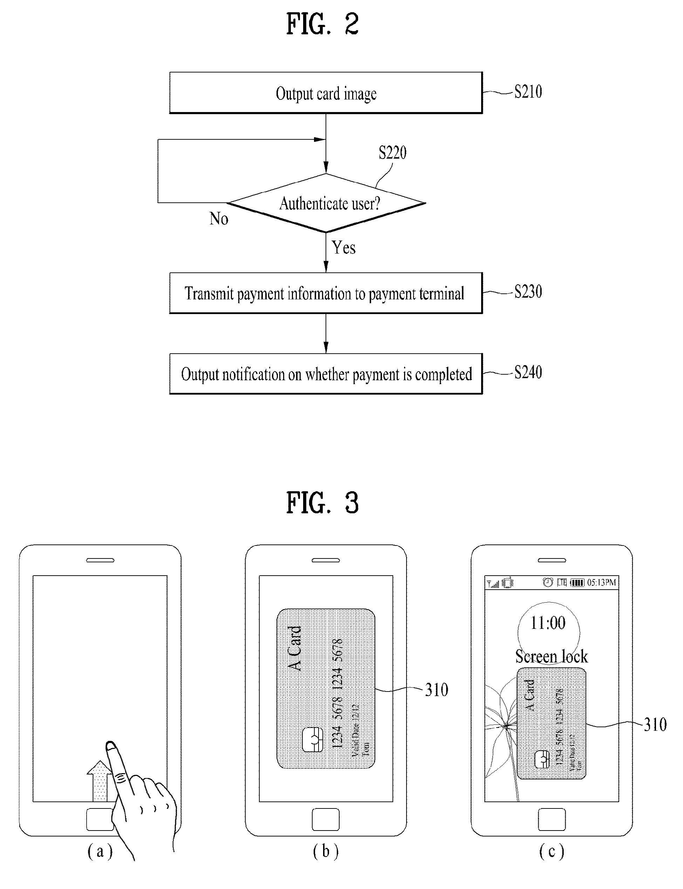

FIG. 2 is a flowchart illustrating a process of performing a payment using a card registered at a mobile terminal according to the present specification. First, the controller 180 can control a card image of a card to be used for payment to be displayed on the display unit 151 in response to a user input (S210). In the following, the card image of the card to be used for payment is named 'first card image' in the present specification.

In the present specification, assume that registration of the card to be used for payment and card information on the registered card are already stored in the mobile terminal. Registration of the card information, checking the card information and a payment process can be implemented on a payment application installed in the mobile terminal. If a plurality of cards are registered at the mobile terminal, at least one or more cards among a plurality of the cards can be configured as a main card. The main card can be configured by a user. Or, the controller 180 can configure the main card according to frequency of use of a card.

According to one embodiment of the present specification, if a plurality of cards are configured, a most recently used card can be output on the display unit 151 as a first card image. According to a different embodiment of the present specification, if a plurality of cards are configured, one of a plurality of the cards can be output on the display unit 151 according to a characteristic of a most recently used payment terminal.

For instance, in case of a transportation card used for a bus or a subway, a user should touch the transportation card to the payment terminal when boarding and getting off In this instance, if the characteristic of the payment terminal corresponds to a transportation terminal at the time of completing a previous payment, when a card image of a card to be used for payment is output on the display unit 151 by the user input, the controller 180 can control the most recently used transportation card to be output.

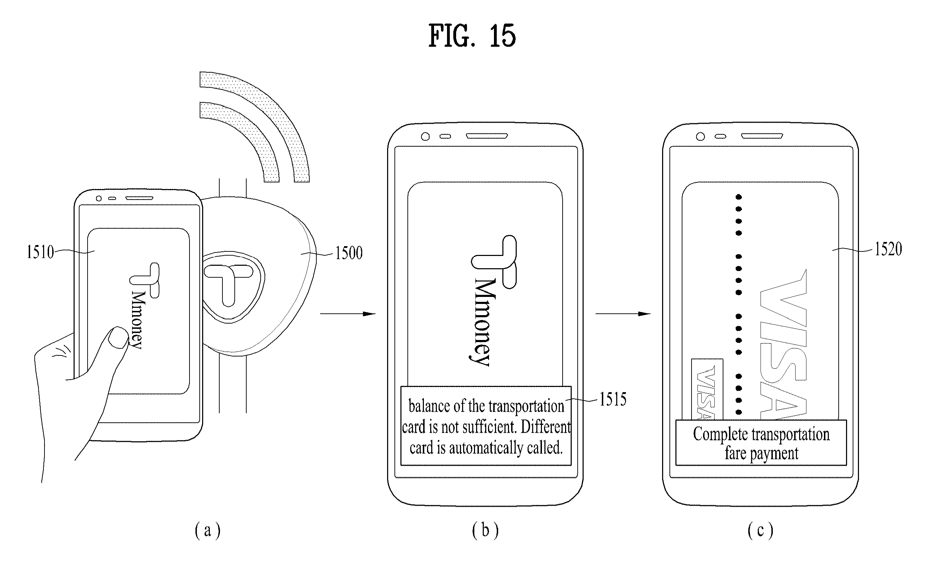

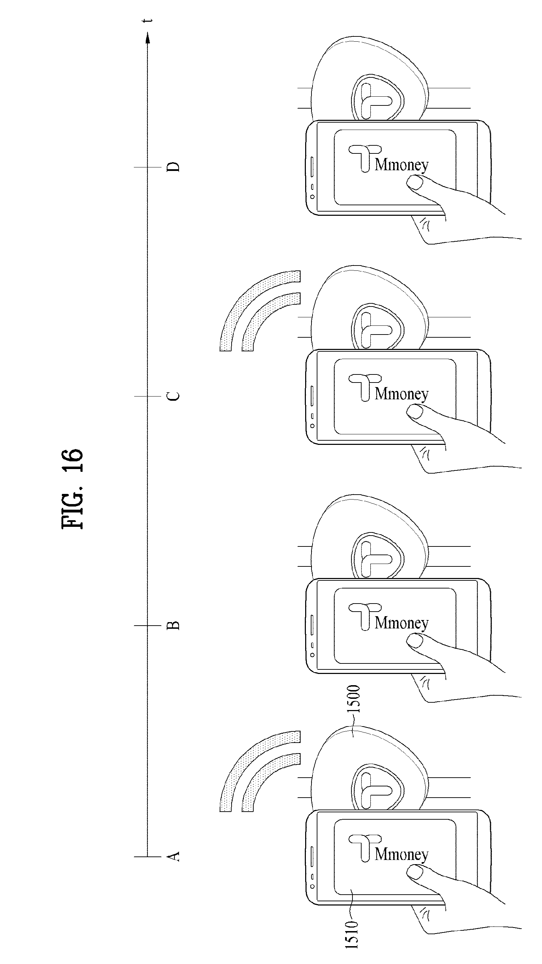

Moreover, a pattern of use of the user is analyzed by analyzing how many times the transportation card is continuously used for the transportation terminal from the timing on which the transportation card starts to be used and can then control a card image of a card to be used for payment to be output on the display unit 151 by the user input. Further, a pattern of use of the user is analyzed by analyzing when the transportation card is used again from the timing on which the transportation card starts to be used and can control a card image of a card to be used for payment to be output on the display unit 151 by the user input. Also, a payment using a transportation card is described again with reference to FIG. 15 and FIG. 16.

An example of outputting a card image is explained in the following with reference to FIG. 3. FIG. 3 is a diagram illustrating an example of outputting an image of a first card on a display unit according to an input of a user.

Referring to FIG. 3 (a) and (b), a card image is output on the display unit 151 in response to a user input. The card image shown in the drawing corresponds to an image of a first card to be used for payment. As shown in an example of FIG. 3 (a), a user input for calling a card may correspond to a drag input dragging a pointer, which has touched an edge of the display unit 151, in a prescribed direction, by which the present invention may be non-limited.

In addition, a touch sensor constructing a layer structure with the display unit 151 can be periodically activated to detect a touch input. By doing so, the mobile terminal can receive a touch input although power of the display unit 151 is turned off. In this instance, a period of activating the touch sensor may vary according to a state that power of the display unit 151 is turned on and off.

As an example, if the power of the display unit 151 is tuned on, the touch sensor constantly maintains an activated status to immediately react in response to a user input or may be repeatedly activated with a short interval (i.e., the touch sensor is activated with a first period). On the contrary, if the power of the display unit 151 is tuned off, the touch sensor can be activated with a longer interval to reduce unnecessary power consumption (i.e., the touch sensor is activated with a second period (> first period). If a predetermined user input is received when power of the display unit 151 is turned off, the controller 180 makes the power of the display unit 151 turn on and can control an image of a first card to be output. FIG. 3 (a) and (b) shows an example that the power of the display unit 151 is turned on and the image 310 of the first card is output.

In addition, assume that the mobile terminal shown in FIG. 3 (a) is in an idle state. In this instance, the idle state may indicate a state that the mobile terminal is not in use. In order to reduce unnecessary power consumption, the display unit 151 can maintain an off state (or an inactivated state) in the idle state. In this instance, the off state indicates a state that light lighting the display unit 151 it turned off. When the power of the display unit 151 is turned off, not information nor a graphic image is output on the display unit 151.

On the contrary, when the power of the display unit 151 is turned on (or activated state) may indicate when the light lighting the display unit 151 is turned on. When the display unit 151 is turned on, information or a graphic image can be output according to a control of the controller 180. Hence, FIG. 3 (b) shows an embodiment that the card image is output as the power of the display unit 151 is turned on from the idle state of the mobile terminal. On the contrary, as shown in an embodiment of FIG. 3 (c), the controller 180 can control the card image 310 to be displayed by overlaying a lock screen or a home screen.

Referring back to FIG. 2, if user authentication is completed while the card image is output (Yes in S220), the controller 180 transmits card information corresponding to the displayed card image to a payment terminal and can control payment between the mobile terminal and the payment terminal to be performed (S230).

Further, the user authentication can be performed using biometric information, a predetermined password, a predetermined touch pattern, tapping the display unit 151 according to a predetermined pattern, a signature, voice and the like. If a prescribed user input is received, the controller 180 can perform the user authentication. The controller 180 can also perform the user authentication by comparing an input, which is received while a card image is output and predetermined authentication information with each other.

As an example, when a card image is output, if an iris of a user is recognized and the recognized iris is matched with an iris registered in advance or when a card image is output, if a fingerprint of a user is recognized and the recognized fingerprint is matched with a fingerprint registered in advance, the user may be authenticated. Or, a user can be authenticated based on whether a touch input pattern received on the display unit 151 while a card image is output is tapping the display unit 151 according to a predetermined touch pattern or a predetermined pattern.

A user can be authenticated based on whether a trajectory of a pointer dragged on the display unit 151 while a card image is output is matched with a signature image registered in advance (or a signature image of a card to be used). Or, a user can be authenticated based on whether voice input via a microphone 122 while a card image is output is matched with voice registered in advance. If a user authentication is performed by a user input, the controller 180 can control a message (e.g., a message requesting an iris input or a fingerprint input) necessary for the user authentication to be output on the display unit 151.

Meanwhile, if an output card image corresponds to a transportation card, the controller 180 omits the user authentication procedure and can transmit payment information to a payment terminal. In general, since an amount of money paid by the transportation card is classified as a small amount of money, if it is necessary for a user to perform a separate authentication procedure for a small sum settlement, it may bother the user.

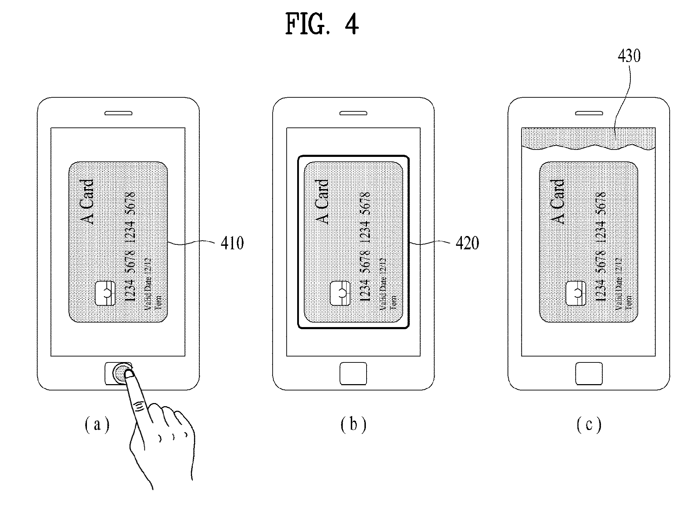

Next, FIG. 4 is a diagram illustrating an example of outputting information indicating that user authentication is completed. As shown in an example of FIG. 4 (a), if a right fingerprint is input via a fingerprint input unit while a card image 410 is output, user authentication can be completed. In this instance, the controller 180 can control information indicating completion of the user authentication to be output via the display unit 151. As an example, as shown in an example of FIG. 4 (b), the completion of the user authentication can be indicated by outputting a card image surrounded by an image object 420. As shown in an example of FIG. 4 (c), the completion of the user authentication can be checked by outputting an image 430 of a wave shape at one end of the display unit 151.

Unlike the example shown in FIG. 4 (b), the completion of the user authentication can also be indicated by a message, an icon, changing color of a card image, On/Off of a specific image object (e.g., a prescribed image object is displayed before the user authentication is completed and display of the prescribed image object is terminated after the user authentication is completed) and the like.

If the user authentication is completed, the controller 180 can transmit payment information to a payment terminal. In particular, after the user authentication is completed, the controller 180 can control a magnetic stripe communication module to broadcast card information. The controller 180 can maintain output of information indicating that the user authentication is completed while the payment information is transmitted. In particular, the information indicating that the user authentication is completed can also be used to indicate a state that the card information is transmittable to the payment terminal.

The payment terminal can include a POS (point of sale) terminal including a magnetic card reader, a mobile POS terminal including a magnetic card reader, a NFC payment terminal and the like. If a card image is displayed, the controller 180 can control a communication module (e.g., a NFC module or a short-range magnetic stripe communication module) used for performing payment to be activated to enable payment to be performed using a card corresponding to the displayed card image. In this instance, card information, which is transmitted to the payment terminal by the mobile terminal, can include at least one selected from the group consisting of a name of a card, a company from which the card is issued, a card number, an expiration date, a CVC, and a signature image.

As an example, if the mobile terminal approaches to a NFC payment terminal after the user authentication is completed, the controller 180 can transmit card information to the NFC payment terminal. Subsequently, the NFC payment terminal can perform payment based on the received card information.

As a different example, if the user authentication is completed, the controller 180 can broadcast card information via a magnetic stripe communication module. Subsequently, as the mobile terminal approaches to a magnetic payment module, if a magnetic payment terminal enters an audible range of the magnetic stripe communication module, the magnetic payment terminal can listen to the card information broadcasted by the mobile terminal.

Subsequently, the magnetic payment terminal can perform payment based on the listened card information. If the user authentication is completed, the controller 180 can control information, which indicates that payment is feasible via a card image, to be output via the display unit 151.

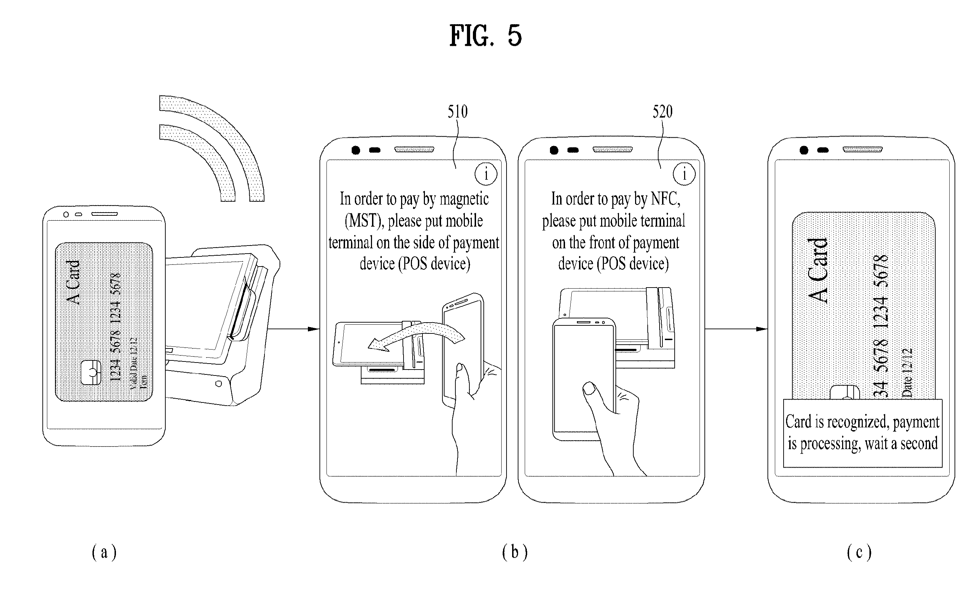

FIG. 5 is a diagram illustrating an example of displaying information guiding a method of recognizing a payment terminal on a display unit. FIG. 5 (a) shows a state that user authentication is completed. The state corresponds to a state capable of transmitting card information corresponding to the first card image via the wireless communication unit 110. Yet, in this state, it is unable to know a communication module configured to perform payment among communication modules mounted on the payment terminal. For instance, the payment terminal may include either a NFC module or a short-range magnetic stripe communication module only or may include both the NFC module and the short-range magnetic stripe communication module. Hence, the controller 180 can control the wireless communication module 110 to perform communication capable of searching for a communication module mounted on the payment terminal.

FIG. 5 (b) shows a state that searching a type of a communication module mounted on the terminal is completed. In this instance, the controller 180 can control information guiding a method of recognizing a payment terminal according to a type of a communication module mounted on the payment terminal to be displayed on the display unit 151. As an example, if a short-range magnetic stripe communication module is mounted on the payment terminal, the controller 180 can display information 510 guiding a recognition method appropriate for short-range magnetic stripe communication on the display unit 151.

As a different example, if a NFC module is mounted on the payment terminal, the controller 180 can display information 520 guiding a recognition method appropriate for NFC communication on the display unit 151. Meanwhile, the controller 180 can control the audio output unit 152 to output an audio guide indicating a state that two or more communication modules are all activated. Moreover, if the controller 180 intends to preferentially use a communication module, the controller 180 can control the audio output unit 152 to output an audio guide guiding an approaching method appropriate for the specific communication module. A user can prevent duplicated payment from being occurred via the guide.

Meanwhile, the controller 180 identifies a position of the payment terminal via the camera 121 and can provide a user with information on a direction to which the mobile terminal 100 should be moved. Moreover, the controller 180 can control information, which guides a direction and a position of the mobile terminal in more detail according to a relative position of the payment terminal and the mobile terminal 100 and a type of a communication module mounted on the payment terminal, to be displayed on the display unit 151.

FIG. 5 (c) shows an example that the controller 180 controls a state of performing communication appropriate for a communication module mounted on the payment terminal to be displayed on the display unit 151. In this instance, the controller 180 can control the audio output unit 152 to output an audio guide indicating a state that communication is performed. And, the controller 180 can also control the haptic module 153 to generate tactile feedback indicating the state that communication is performed.

Meanwhile, although one communication module is mounted on the payment terminal only, the wireless communication unit 110 may attempt to transmit card information via a communication module different from the communication module mounted on the payment terminal.

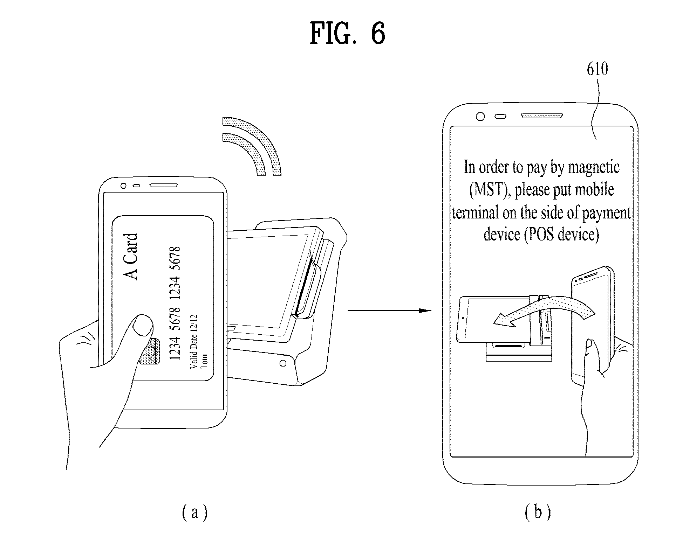

FIG. 6 is a diagram illustrating an example of displaying information, which is configured to switch a method of recognizing a payment terminal, on a display unit. FIG. 6 (a) shows a state capable of transmitting card information corresponding to the first card image via the wireless communication unit 110 after user authentication is completed. Yet, for instance, although a NFC module is mounted on the payment terminal only, the wireless communication unit 110 intends to transmit card information via the short-range magnetic stripe communication module. In this instance, if payment is not completed within a prescribed time, the controller 180 can control the wireless communication unit 110 to perform communication capable of searching for a communication module different from a currently activated communication module mounted on the payment terminal. As a result, the controller 180 can identify that the NFC module is mounted on the payment terminal only.

Referring to FIG. 6 (b), the controller 180 can control guide information 610, which is configured to switch a recognition method to a recognition method appropriate for a communication module mounted on the payment terminal, to be displayed on the display unit 151.

With the help of the aforementioned state, the mobile terminal 100 is ready to perform payment via the payment terminal. In this instance, the controller 180 can output a notification on weather payment is completed in response to the card information corresponding to the first card image. Whether or not the payment is completed means whether a sum is paid by the payment via the card information corresponding to the first card image. Hence, if a prescribed sum is paid via the mobile terminal 100, it indicates that the payment is successfully performed. On the contrary, if a prescribed sum is not paid, it indicates that the payment is not performed.

Meanwhile, the controller 180 can switch a communication module into an NFC module according to an input signal received from a user. In this instance, if an input signal is received, the controller 180 can provide the user with a notification notifying the switching to the NFC module by providing a vibration feedback, a voice feedback, or a visual feedback to the user.

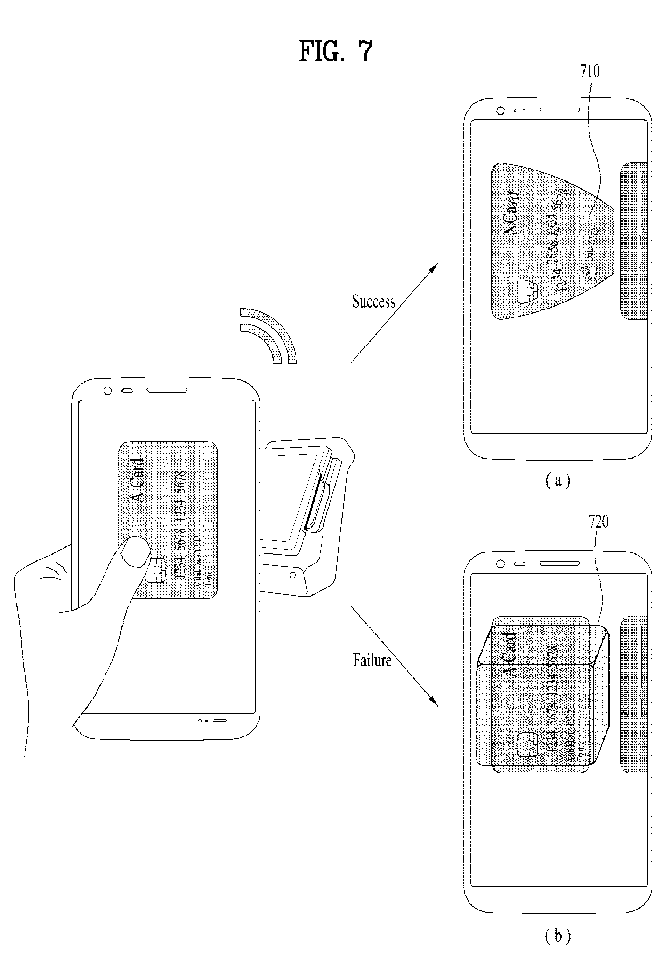

FIG. 7 is a diagram illustrating an example of outputting a notification for whether a payment is completed on a display unit according to one embodiment of the present specification. FIG. 7 (a) is a diagram illustrating an example of a case that a payment is successfully performed. The mobile terminal 100 can provide a user with a graphic effect like a card image 710 entering the payment terminal. FIG. 7 (b) is a diagram illustrating an example of a case that a payment is failed. The mobile terminal 100 can provide a user with a graphic effect like a frozen card image 720

According to one embodiment of the present specification, when a payment for card information corresponding to the first card image is successfully performed, the controller 180 can output a notification on the successful payment.

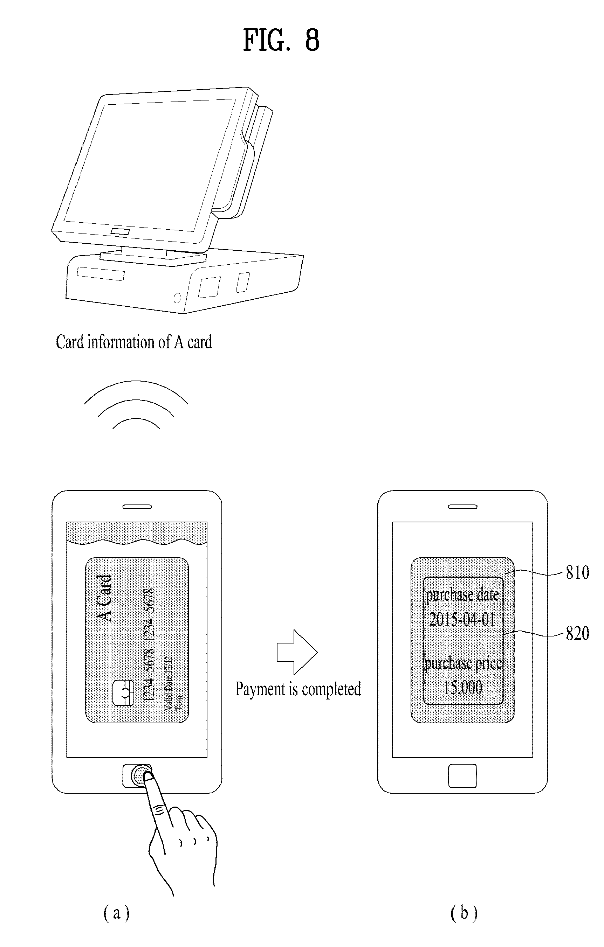

FIG. 8 is a diagram illustrating an example of outputting a notification for a successful payment on a display unit according to a different embodiment of the present specification. Referring to FIG. 8 (a) and (b), if a payment is completed, trade information 820 including purchase date and purchase price is output on a displayed card image 810 by overlaying the displayed card image. If card information is transmitted and payment is completed, the controller 180 can control the trade information to be output as a notification for the successful payment. The trade information can include information such as purchase date, purchase price and the like.

In this instance, the trade information may correspond to information obtained from a payment terminal or information obtained from a server of a card company by performing communication via a mobile communication network. As a different example, the controller 180 can obtain trade information by analyzing a text message, which is received in case of completing card payment.

Although FIG. 8 (a) and (b) show an example that trade information is output on a card image by overlaying the card image as a notification for a successful payment, it is not mandatory to output the trade information on the card image by overlaying the card image. As a different example, the controller 180 can control the trade information to be output while terminating display of the card image or can control a receipt image including the trade information to be output instead of the card image. In this instance, the receipt image may correspond to an image obtained from a payment terminal or a server of a card company. Or, the receipt image may correspond to an image generated by the mobile terminal based on trade information extracted from a text message.

According to a different embodiment of the present specification, when a payment for card information corresponding to the first card image is not successfully performed, the controller 180 can output a notification according to a type of a payment error. If a prescribed sum is not paid, a reason of failing to successfully perform a payment, i.e., a cause for a payment failure may vary. The cause for the payment failure may occur due to a technical issue between the mobile terminal and the payment terminal or a finance-related configuration state in associated with the card.

As an example of a payment failure capable of being occurred by various technical issues, if a communication module mounted on the payment terminal is far from the wireless communication unit 110 of the mobile terminal 100 or if there exists an obstacle between the communication module and the wireless communication unit 110 of the mobile terminal 100, communication may not be properly performed.

According to one embodiment of the present specification, if information on a successful payment is not received from the payment terminal via the wireless communication unit 110 within prescribed time after card information corresponding to the first card image is transmitted, the controller 180 can output a notification to indicate that the prescribed time has elapsed.

According to a different embodiment of the present specification, if information on a successful payment is not received from the server of the card company via the wireless communication unit 110 within prescribed time after card information corresponding to the first card image is transmitted, the controller 180 can output a notification to indicate that the prescribed time has elapsed.

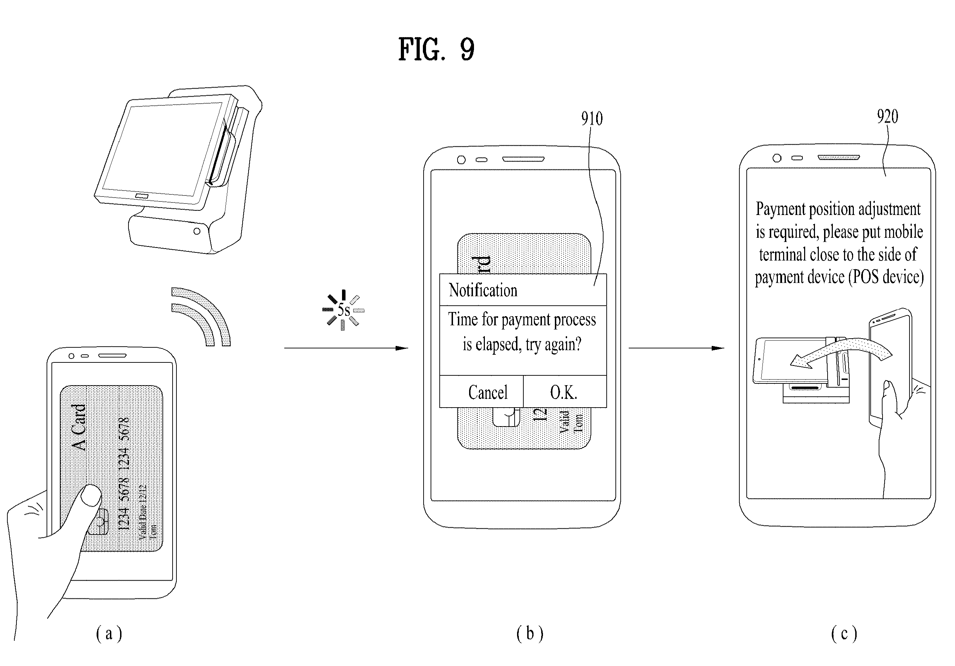

FIG. 9 is a diagram illustrating an example of outputting a notification for the elapse of prescribed time on a display unit. Referring to FIG. 9 (a), the mobile terminal 100 is far from the payment terminal. Hence, it may be different to perform communication between the mobile terminal 100 and the payment terminal. In this instance, as shown in FIG. 9 (b), if predetermined prescribed time elapses, the controller 180 can control a notification, which indicates the elapse of the prescribed time, to be displayed on the display unit.

In addition, as shown in FIG. 9 (c), the controller 180 can control a guide image 920 for a position on the mobile terminal to be displayed on the display unit 151 to perform communication between the payment terminal and the wireless communication unit 110. A user can recognize that communication is not performed via the notification and can then attempt to make a payment by more approaching to the payment terminal.

As a different example of a payment failure capable of being occurred due to various technical issues, if strength of a signal output by the wireless communication unit 110 is weak, communication may not be performed. According to an embodiment of the present specification, if a payment for card information corresponding to the first card image is not performed because strength of a signal output from the wireless communication unit 110 is weak, the controller 180 can output a notification to indicate that the strength of the signal is weak.

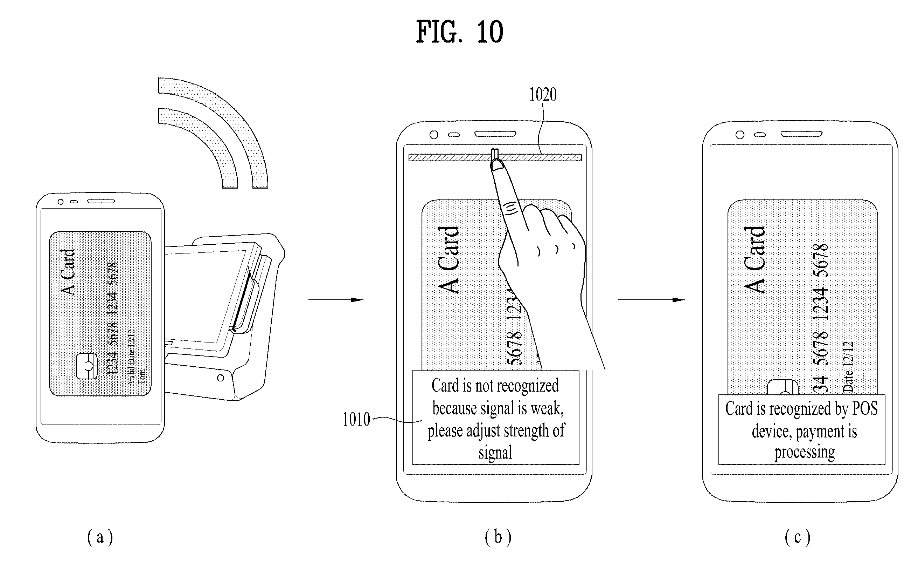

FIG. 10 is a diagram illustrating an example of a situation that a payment is not performed due to a weak signal. Referring to FIG. 10 (a), the mobile terminal 100 attempts to transmit card information. However, the payment terminal is unable to receive a signal because the signal output from the wireless communication unit 110 is weak. In this instance, as shown in FIG. 10 (b), the controller 180 can display a notification 1010 on the display unit 151 to notify that strength of the signal is weak.

Moreover, the controller 180 can display an interface 1020 capable of controlling the strength of the signal output from the wireless communication unit on the display unit 151. As a result, as shown in FIG. 10 (c), it can make a payment. As a further different example of a payment failure capable of being occurred due to various technical issues, communication is unable to be performed due to malfunction of the payment terminal. According to embodiment of the present specification, if payment for the card information corresponding to the first card image is not performed due to malfunction of the payment terminal, the controller 180 can output a notification on the malfunction of the payment terminal.

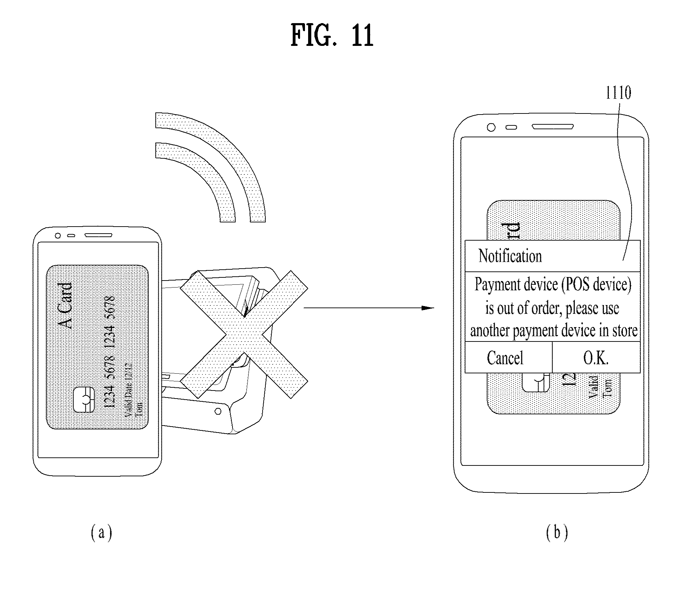

FIG. 11 is a diagram illustrating an example of a situation that a payment is not performed due to a malfunction of a payment terminal. Referring to FIG. 11 (a), it can check that the mobile terminal attempts to transmit card information. Although there is no problem in the mobile terminal 100, the payment terminal is unable to receive a signal due to a payment terminal failure. In this instance, as shown in FIG. 11 (b), the controller 180 can display a notification 1110 on the display unit 151 to notify that a failure occurs in the payment terminal.

As a further different example of a payment failure capable of being occurred due to various technical issues, communication is unable to be performed due to a malfunction of a communication module belonging to either the mobile terminal 100 or the payment terminal. According to embodiment of the present specification, if the card information corresponding to the first card image is not transmitted via a first communication module, the controller 180 can control a notification to be output to notify that there is an error in transmitting the card information via the first communication module.

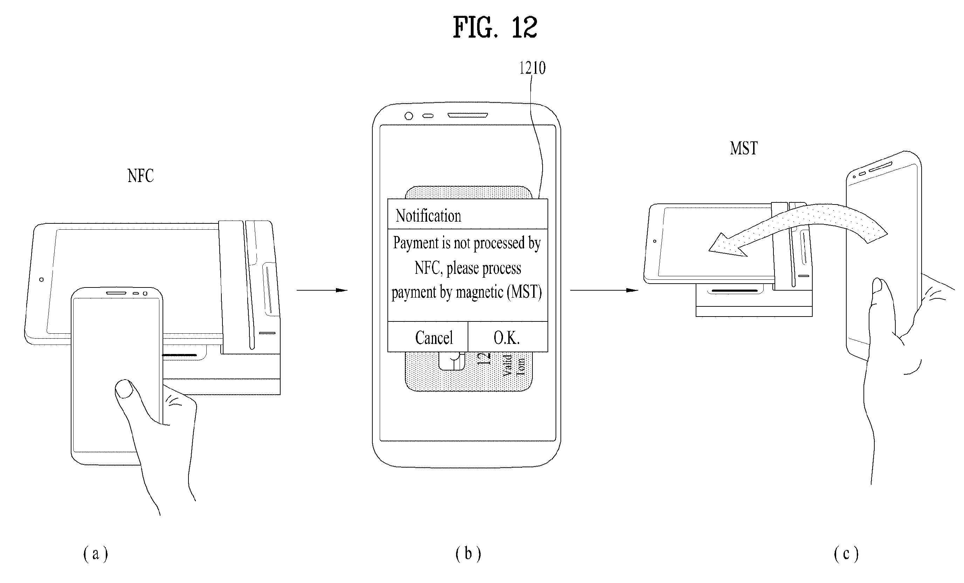

FIG. 12 is a diagram illustrating an example of a situation that a payment is not performed due to a malfunction of a communication module. Referring to FIG. 12 (a), the mobile terminal 100 attempts to transmit card information via a NFC scheme. In this instance, both a NFC communication module and a short-range magnetic stripe communication module are mounted on the payment terminal.

However, the payment terminal is unable to receive a signal via the NFC communication module since a malfunction has occurred on the NFC communication module mounted on the payment terminal. In this instance, as shown in FIG. 12 (b), the controller 180 can display a notification 1210 on the display unit to notify that the card information is not transmitted via the NFC communication module. Moreover, as shown in FIG. 12 (c), if the card information corresponding to the first card image is not performed via the first communication module, the controller 180 can control the wireless communication unit to transmit the card information corresponding to the first card image via a second communication module, i.e., the short-range magnetic stripe communication module.

Meanwhile, as shown in FIG. 12 (b), the controller 180 does not separately display a notification 1210 for notifying that card information is not transmitted via an NFC communication module and can control a wireless communication unit to automatically transmit the card information via a short-range magnetic stripe communication module. In this instance, the controller 180 can inform a user of switching of a communication module via a vibration feedback, a voice feedback, a visual feedback or the like.

One of the reasons of payment failure capable of being occurred by finance-related configuration state associated with the card is an excess of amount of money payable by the card. An upper limit of amount of money payable by the card can be set to the card according to a financial standing of a user. The upper limit of amount of money payable by the card can be differently set according to a card.

In this instance, if an amount of money intended to be paid by a user exceeds the upper limit of amount of money payable by the card or if total payment amount exceeds the amount of money payable by the card due to the present payment since previous payment amount is accumulated, it may be difficult to make a payment. According to embodiment of the present specification, if a payment is not performed due to excess of a payment amount limit of a card corresponding to the first card image, the controller 180 can output a notification to notify the excess of the payment amount limit.

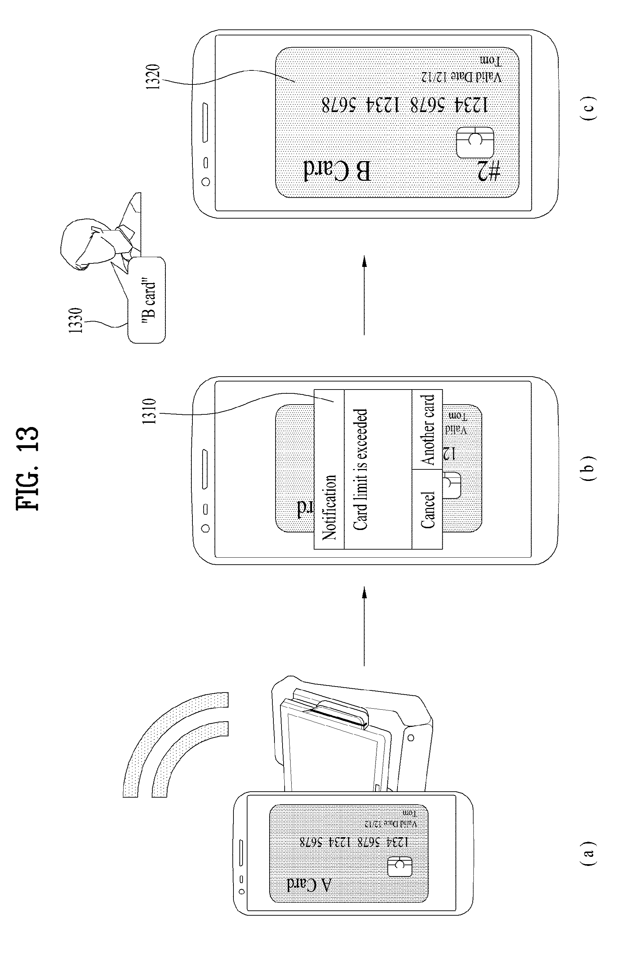

FIG. 13 is a diagram illustrating an example of a situation that a payment is not performed due to excess of a payment limit. Referring to Fig. 13 (a), the mobile terminal 100 attempts to transmit card information. Although there is no technical problem between the mobile terminal 100 and the payment terminal, according to the card information corresponding to the first card image, the card has exceeded a payment limit. Hence, payment is not made.

In this instance, as shown in FIG. 13 (b), the controller 180 can display a notification 1310 on the display unit 151 to notify that payment is not made due to the excess of the payment limit of the card corresponding to the first card image. Moreover, as shown in FIG. 13 (c), if the payment is not made due to the excess of the payment limit of the card corresponding to the first card image, the controller 180 can display an image 1320 of a card corresponding to a second card image on the display unit 151.

The second card can be configured in various ways. According to one embodiment of the present specification, the controller 180 can store a pattern of using a card of a user according to an accumulated card payment frequency, a card payment frequency according to a payment terminal, a card payment frequency according to a type of a place of business in which a payment terminal is installed, a card payment frequency according to a payment place and a card payment frequency according to a range of a payment amount. If a payment is not made due to an excess of a payment limit of a card corresponding to the first card image, the controller 180 can display a card, which is selected according to a pattern of using the card of the user, on the display unit 151 as the second card image.

In addition, a second card may correspond to a card most recently used by a user, a card most frequently used by a user during a prescribed period, a card of which a use limit is highest, a card of which a remaining amount to the use limit is highest, a card configured as a main card or the like. According to a different embodiment of the present specification, if a payment is not made due to an excess of a payment limit of a card corresponding to the first card image, the controller 180 can display a card, which is configured by a user in advance, on the display unit 151 as the second card image.

According to a further different embodiment of the present specification, if a payment is not made due to an excess of a payment limit of a card corresponding to the first card image, the controller 180 can display a card, which is indicated by voice of a user input via the microphone 122, on the display unit 151.

In the aforementioned embodiments, an embodiment of outputting a notification on whether the payment is completed on the front side of the display unit 151 is mainly explained. However, the present specification is not limited by the embodiment of displaying the notification on the front side of the display unit 151 only.

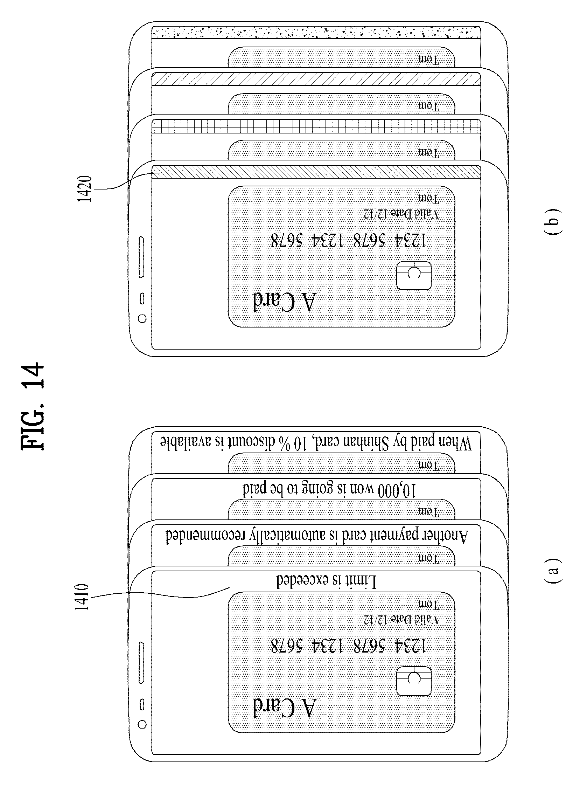

If the display unit 151 corresponds to a bendable display, the controller 180 can display a notification on whether a payment for card information corresponding to the first card image is completed on a sub area. FIG. 14 is a diagram illustrating an example of a notification displayed on a sub area of a bended display.

Referring to FIG. 14 (a), various phrases 1410 according to a payment situation are output on the sub area. The controller 180 can display a text for whether the payment is completed on the sub area. Referring to FIG. 14 (b), various colors 1420 according to a payment situation are output on the sub area. The controller 180 can control colors different from each other, a combination of colors and a change of color to be output according to a type of a notification output on the sub area.

Moreover, the controller 180 can control the audio output unit to output the notification on whether the payment for the card information corresponding to the first card image is completed by audio. The controller 180 can also control the haptic module 153 to output the notification on whether the payment for the card information corresponding to the first card image is completed by tactile feedback. If the aforementioned method of outputting the notification is not restricted to a single method of delivering the notification to a user, it can deliver the notification using two or more methods different from each other at the same time.

Meanwhile, a user may not want to show such a notification as an excess of a card limit and the like to a different person. In this instance, the controller 180 can generate the notification using the haptic module 153 only instead of sound or light. A method of generating a notification in response to each of various situations capable of being occurred in the middle of making the payment can be determined by a configuration of a user.

FIG. 15 is a diagram illustrating an example of making a payment using a transportation card according to one embodiment of the present specification. When a user uses such a transportation means as a bus, a subway or the like, the user can use a transportation card as a payment tool. The transportation card includes a deferred payment transportation card and a pre-paid transportation card.

Similar to a credit card, the deferred payment transportation card corresponds to a card paying the amount of spent at a time on a prescribed date. Hence, a payment action is not restricted by whether or not there is a balance. Further, in case of the pre-paid transportation card, a user preferentially recharges the pre-paid transportation card as much as a necessary amount and uses the pre-paid transportation card. Hence, whether or not the pre-paid transportation card is available can be determined depending on whether or not there is a balance. In an embodiment of FIG. 15, a method of automatically making a payment when a balance is not sufficient is explained.

In the present invention, when a user tags a transportation card to a payment terminal, assume that the controller 180 deactivates a short-range magnetic stripe communication module and activates an NFC communication module. Referring to FIG. 15 (a), if a transportation card payment terminal 1500 and a mobile terminal 100 are positioned within a distance range in which NFC communication is available, the mobile terminal 100 may attempt to transmit information of a transportation card 1510 to the transportation card payment terminal 1500 to make a payment for fares. In this instance, if a balance of the transportation card 1510 is not sufficient, a payment of the transportation card 1510 may fail.

In this instance, as shown in FIG. 15 (b), the controller 180 can control a notification 1515 to be displayed to indicate that a balance of the transportation card 1510 is not sufficient, a payment is failed and a different payment card is automatically called. And, as shown in FIG. 15 (c), the controller 180 can control an image 1520 of a predetermined payment card to be output on the display unit 151. In this instance, the predetermined payment card may correspond to a card configured to be recommended by a user or the card configured to be automatically recommended. In addition, the controller 180 can attempt to transmit information of the predetermined payment card to the transportation card payment terminal 1500 without a separate authentication procedure and can complete transportation fare payment.

Further, when a user transfers a transportation means later, the controller 180 can display an image of the predetermined payment card 1520 on the display unit 151 instead of the transportation card 1510 of which a balance is not sufficient.

Next, FIG. 16 is a diagram illustrating an example of making a payment using a transportation card according to a different embodiment of the present specification. More specifically, FIG. 16 shows a method of determining timing of transmitting payment information according to the tagging count when a user tags a transportation card to a terminal while getting on/off transportation means. In an embodiment of FIG. 16, assume that the controller 180 deactivates a short-range magnetic stripe communication module and activates an NFC communication module when a payment is made in a transportation means.

Whenever the transportation card payment terminal 1500 is recognized (tagging), the controller 180 can transmit payment information of the transportation card 1510 to the transportation card payment terminal 1500 in principle. However, depending on a transportation card system, if a user tags the transportation card 1510 to the transportation card payment terminal 1500 whenever the user gets on/off a transportation means, it may not necessary to transmit card information time after time.

Timing A shown in FIG. 16 may correspond to timing that a user gets on a first transportation means. For example, the first transportation means may correspond to a bus. In this instance, if the transportation card payment terminal 1500 is recognized, the controller 180 can display an image of the transportation card 1510 on the display unit 151. The controller 180 can also make a payment by transmitting payment information to the transportation card payment terminal 1500.

Subsequently, timing B shown in FIG. 16 may correspond to timing that the user gets off the first transportation means. In this instance, if the transportation card payment terminal 1500 is recognized, the controller 180 can control payment information not to be transmitted to the transportation card payment terminal 1500. This is because, since the payment information is already transmitted to the transportation card payment terminal and payment is completed when boarding, it is not necessary to make a payment again by transmitted the payment information when the user gets off the transportation means.

Also, timing C shown in FIG. 16 may correspond to timing that the user gets on a second transportation means. For example, the second transportation means corresponds to a transportation means different from the first transportation means. The user may transfer from a bus to a subway or a different bus. In this instance, the controller 180 can make a payment by transmitting payment information to the transportation card payment terminal 1500.

Subsequently, timing D shown in FIG. 16 may correspond to timing that the user gets off the second transportation means. In this instance, if the transportation card payment terminal 1500 is recognized, the controller 180 can control payment information not to be transmitted to the transportation card payment terminal 1500.

In particular, in the aforementioned embodiment, if tagging of the transportation card 1510 is performed by an odd number, it is recognized as a payment for getting on transportation means and payment information is transmitted to the payment terminal. If tagging of the transportation card is performed by even number, it is recognized as a payment for getting off transportation means and it can control payment information not to be transmitted to the payment terminal.

Advantageous effects of the mobile terminal according to an embodiment of the present invention and a method of controlling therefor are described in the following. According to at least one or more embodiments of the present invention, a mobile terminal is provided that enhances user convenience. Specifically, if an error occurs in a mobile terminal, which is usable by registering a real card at the mobile terminal, a control method capable of informing a user of the error and handling the error is provided.

According to an embodiment of the present invention, a mobile terminal is provided capable of minimizing an action of a user to solve an error according to a type of a payment error and a method of controlling therefor.

The present invention encompasses various modifications to each of the examples and embodiments discussed herein. According to the invention, one or more features described above in one embodiment or example can be equally applied to another embodiment or example described above. The features of one or more embodiments or examples described above can be combined into each of the embodiments or examples described above. Any full or partial combination of one or more embodiment or examples of the invention is also part of the invention.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

## Claims

1. A mobile terminal, comprising:
a wireless communication processor configured to perform communication with a payment terminal;
a display; and
a controller configured to:
display a first card image corresponding to a first card to be used for payment on the display in response to a user input,
perform user authentication for using the first card for payment,
transmit card information corresponding to the first card to the payment terminal via the wireless communication processor, and
output a notification indicating whether payment using the first card image is completed.

2. The mobile terminal of claim 1, wherein the notification indicates a successful payment when the payment using the first card is successfully performed.

3. The mobile terminal of claim 1 or claim 2, wherein the notification indicates a type of payment error when the payment using the first card is not successfully performed.

4. The mobile terminal of claim 3, wherein when information corresponding to an unsuccessful payment is received from the payment terminal via the wireless communication processor or a server of a card company corresponding to the first card via a mobile communication network within a prescribed time after the card information is transmitted, the controller is configured to output the notification on an elapse of the prescribed time.

5. The mobile terminal of claim 4, wherein the controller is configured to display a guide image on the display indicating a position the mobile terminal should be placed with respect to the payment terminal to perform communication between the payment terminal and the wireless communication processor.

6. The mobile terminal of claim 3, wherein the notification indicates a weak signal strength when the payment using the first card is unsuccessful because of a strength of a signal output from the wireless communication processor, and wherein the controller is configured to display graphic user interface on the display controlling the strength of the signal output from the wireless communication processor.

7. The mobile terminal of claim 3, wherein the wireless communication processor comprises at least first and second communication modules for performing communication with the payment terminal, and
wherein when the card information corresponding to the first card is not transmitted via the first communication module, the controller is configured to output a notification according to a transmission error of the card information transmitted via the first communication module and control the wireless communication processor to transmit the card information via the second communication module.

8. The mobile terminal of claim 3, wherein the notification indicates a malfunction of the payment terminal when the payment using the first card is not successfully performed due to the malfunction of the payment terminal.

9. The mobile terminal of claim 3, wherein the notification indicates a payment limit has been exceeded when the payment using the first card is not successfully performed due to the exceeding of the payment limit of the first card, wherein when the payment is not successfully performed due to the exceeding of the payment limit, the controller is configured to display a second card image corresponding to a second card to be used for payment.

10. The mobile terminal of claim 9, wherein the controller is configured to store a card use pattern of a user according to at least one of an accumulated card payment frequency, a card payment frequency according to the payment terminal, a card payment frequency according to a type of a business place in which the payment terminal is installed, a card payment frequency according to a payment place and a card payment frequency according to a range of a payment amount, and
wherein when the payment is not performed due to the exceeding of the payment limit of the first card, the controller is configured to display another card selected according to the card use pattern on the display as the second card image.

11. The mobile terminal of claim 9, wherein when the payment is not successfully performed due to the exceeding of the payment limit of the first card, the controller is configured to display another card predetermined by a user on the display as the second card image.

12. The mobile terminal of claim 9, further comprising:
a microphone,
wherein when the payment is not successfully performed due to the exceeding of the payment limit of the first card, the controller is configured to display another card on the display corresponding to a card indicated by a user voice input via the microphone as the second card image.

13. The mobile terminal of any one of claims 1 to 12, wherein the controller is configured to display the notification on whether the payment using the first card is completed on the display.

14. The mobile terminal of claim 13, wherein the display comprises a curved display containing a main area facing a front side of the mobile terminal and a sub area containing a prescribed curvature extended from the main area, and
wherein the controller is configured to:
display the notification on whether the payment using the first card image is completed on the sub area, and
control colors different from each other, a combination of the colors or a change of the colors to be output according to a type of the notification displayed on the sub area.

15. A method of controlling a mobile terminal, the method comprising:
displaying a first card image corresponding to a first card to be used for payment on a display in response to a user input;
performing, via a controller, user authentication for using the first card for payment;
transmitting, via a wireless communication processor, card information corresponding to the first card to a payment terminal; and
outputting, via the controller, a notification indicating whether payment using the first card image is completed.
